# EUROPEAN PATENT APPLICATION

(11) **EP 4 730 684 A1**
(43) Date of publication of application: **22.04.2026**
(21) Application number: 23941876.7
(22) Date of filing: 19.06.2023
(51) Int. Cl.: H04L 5/00

(54) **ACTIVATION CONTROL METHOD AND APPARATUS, COMMUNICATION APPARATUS AND STORAGE MEDIUM**

(71) Applicant: Beijing Xiaomi Mobile Software Co., Ltd., Beijing 100085 (CN)
(72) Inventor: LI, Xiaolong, Beijing 100085 (CN); LI, Lisi, Beijing 100085 (CN)
(74) Representative: Dehns Germany Partnerschaft mbB
(86) International application number: PCT/CN2023/101158
(87) International publication number: WO 2024/259569

(57) **Abstract**

The present disclosure relates to the technical field of communications, and in particular to an activation control method and apparatus, a communication apparatus and a storage medium. The activation control method comprises: sending first instruction information to a second device, wherein the first instruction information is used for instructing the second device to activate or deactivate a first uplink reference signal resource associated with a terminal at a first bandwidth. According to the present disclosure, the situation that under the condition that the terminal sends an uplink reference signal in a bandwidth aggregation mode, it is difficult to determine resources of the uplink reference signal which need to be activated or deactivated to the terminal is avoided.

## Description

### TECHNICAL FIELD

The present disclosure relates to the technical field of communication, and in particular, to an activation control method, an activation control apparatus, a communication device, and a storage medium.

### BACKGROUND

During the positioning process, the terminal can send an uplink reference signal, and the network device can perform positioning operations based on the uplink reference signal, where the uplink reference signal can also be called an uplink positioning reference signal. In addition, the network device can control the operation of the terminal sending the uplink reference signal, but there are some technical problems in the control process.

### SUMMARY

The embodiments of the present disclosure propose an activation control method, apparatus, communication apparatus, and storage medium to solve the technical problems in the related art.

According to a first aspect of embodiments of the present disclosure, an activation control method is proposed, which is performed by a first device, and the method includes: sending first indication information to a second device, where the first indication information is used to instruct the second device to activate or deactivate a first uplink reference signal resource associated with a first bandwidth of a terminal.

According to a second aspect of the embodiments of the present disclosure, an activation control method is proposed, which is performed by a second device, and the method includes: receiving first indication information sent by a first device, where the first indication information is used to instruct the second device to activate or deactivate a first uplink reference signal resource associated with a first bandwidth of a terminal.

According to a third aspect of the embodiments of the present disclosure, an activation control method is proposed, which is performed by a terminal, and the method includes: receiving second indication information sent by a second device, where the second indication information is used to instruct the terminal to activate or deactivate a first uplink reference signal resource associated with a second bandwidth; and activating or deactivating the first uplink reference signal resource associated with the second bandwidth.

According to a fourth aspect of the embodiments of the present disclosure, an activation control apparatus is proposed, including: a sending module, configured to send first indication information to a second device, where the first indication information is used to instruct the second device to activate or deactivate a first uplink reference signal resource associated with a first bandwidth of a terminal.

According to a fifth aspect of the embodiments of the present disclosure, an activation control apparatus is proposed, the apparatus including: a receiving module, configured to receive second indication information sent by a second device, where the second indication information is used to instruct a terminal to activate or deactivate a first uplink reference signal resource associated with a second bandwidth; and a processing module, configured to activate or deactivate the first uplink reference signal resource associated with the second bandwidth.

According to a sixth aspect of the embodiments of the present disclosure, a communication device is proposed, including: one or more processors; where the processor is configured to call instructions to enable the communication device to perform any of the above-mentioned activation control methods.

According to a seventh aspect of the embodiments of the present disclosure, a communication system is proposed, including a first device, a second device and a terminal, where the first device is configured to implement the activation control method performed by the first device, the second device is configured to implement the activation control method performed by the second device, and the terminal is configured to implement the activation control method performed by the terminal.

According to an eighth aspect of the embodiments of the present disclosure, a storage medium is proposed, where the storage medium stores instructions, and when the instructions are executed on a communication device, the communication device performs any of the above activation control methods.

According to the embodiments of the present disclosure, it is helpful to avoid the difficulty in accurately determining the resource of the uplink reference signal that needs to be activated or deactivated for the terminal when the terminal sends the uplink reference signal in a bandwidth aggregation manner.

### BRIEF DESCRIPTION OF THE DRAWINGS

In order to more clearly illustrate the technical solutions in the embodiments of the present disclosure, the drawings required for use in the description of the embodiments will be briefly introduced below. Obviously, the drawings described below are only some embodiments of the present disclosure. For those skilled in the art, other drawings can be obtained based on these drawings without paying any creative labor.
FIG. 1 is a schematic diagram of an architecture of a communication system according to an embodiment of the present disclosure.
FIG. 2 is an interactive schematic diagram showing an activation control method according to an embodiment of the present disclosure.
FIG. 3 is a schematic flowchart of an activation control method according to an embodiment of the present disclosure.
FIG. 4 is a schematic flowchart of an activation control method according to an embodiment of the present disclosure.
FIG. 5 is a schematic flowchart showing another activation control method according to an embodiment of the present disclosure.
FIG. 6 is a schematic flowchart showing an activation control method according to an embodiment of the present disclosure.
FIG. 7 is a schematic block diagram showing an activation control apparatus according to an embodiment of the present disclosure.
FIG. 8 is a schematic block diagram showing an activation control apparatus according to an embodiment of the present disclosure.
FIG. 9 is a schematic block diagram showing an activation control apparatus according to an embodiment of the present disclosure.
FIG. 10 is a schematic diagram of a structure of a communication device proposed in an embodiment of the present disclosure.
FIG. 11 is a schematic diagram of a structure of a chip proposed in an embodiment of the present disclosure.

### DETAILED DESCRIPTION

Embodiments of the present disclosure provide an activation control method, apparatus, communication device, and storage medium.

In a first aspect, an embodiment of the present disclosure proposes an activation control method, including: sending first indication information to a second device, where the first indication information is used to instruct the second device to activate or deactivate a first uplink reference signal resource associated with a first bandwidth of a terminal.

In the above embodiment, since the first indication information does not merely instruct the second device to activate or deactivate a certain uplink reference signal resource of the terminal, but instructs the second device to activate or deactivate the first uplink reference signal resource associated with the first bandwidth of the terminal, it is convenient for the second device to accurately determine to specifically activate or deactivate the first uplink reference signal resource associated with the first bandwidth, which is conducive to avoiding the difficulty in accurately determining the uplink reference signal resource that needs to be activated or deactivated for the terminal when the terminal sends the uplink reference signal by using bandwidth aggregation.

In combination with some embodiments of the first aspect, in some embodiments, the first device includes a core network device, and the second device includes an access network device.

In the above embodiment, the core network device may send the first indication information to the access network device so that the access network device can accurately determine the resource of the uplink reference signal that needs to be activated or deactivated for the terminal.

In combination with some embodiments of the first aspect, in some embodiments, the first device includes a central unit access network device, and the second device includes a distributed unit access network device.

In the above embodiment, the central unit access network device may send the first indication information to the distributed unit access network device so that the distributed unit access network device accurately determines the resource of the uplink reference signal that needs to be activated or deactivated for the terminal.

In combination with some embodiments of the second aspect, in some embodiments, the first indication information includes at least one of the following: bandwidth information; and uplink reference signal resource information.

In the above embodiment, the second device can determine the first uplink reference signal resource that needs to be activated or deactivated according to the uplink reference signal resource information, so that the first uplink reference signal resource associated with the first bandwidth of the terminal can be accurately activated or deactivated based on the bandwidth information and the uplink reference signal resource information.

In combination with some embodiments of the first aspect, in some embodiments, the bandwidth information includes at least one of the following: a frequency band identifier; bandwidth part information; a common reference point of resource block grids; an absolute frequency position of a reference resource block; an offset relative to the reference point; a carrier bandwidth; and a cell identifier.

In the above embodiments, the indication of the bandwidth information can be implemented in a variety of ways, which is conducive to improving the flexibility of indicating the bandwidth information.

In combination with some embodiments of the first aspect, in some embodiments, the uplink reference signal resource information includes at least one of the following: an identifier of an uplink reference signal resource set; an identifier of an uplink reference signal resource; an identifier of an uplink reference signal resource trigger.

In the above embodiments, the indication of the uplink reference signal resource information can be implemented in a variety of ways, which is conducive to improving the flexibility of indicating the uplink reference signal resource information.

In combination with some embodiments of the first aspect, in some embodiments, the first bandwidth is one bandwidth or multiple bandwidths.

In combination with some embodiments of the first aspect, in some embodiments, the first uplink reference signal resource is one uplink reference signal resource or multiple uplink reference signal resources.

In the above embodiment, the first indication information may indicate activation or deactivation of multiple uplink reference signal resources respectively associated with the multiple bandwidths, thereby improving the flexibility of indicating activation and deactivation operations.

In combination with some embodiments of the first aspect, in some embodiments, the first indication information is carried in at least one of the following: a new air interface positioning protocol A message; an F1AP message.

In the above embodiment, the first indication information may be carried by an existing new air interface positioning protocol A message or F1AP message, which is beneficial to saving communication resources.

In a second aspect, an embodiment of the present disclosure proposes an activation control method, including: receiving first indication information sent by a first device, where the first indication information is used to instruct a second device to activate or deactivate a first uplink reference signal resource associated with a first bandwidth of a terminal.

In the above embodiment, since the first indication information does not merely instruct the second device to activate or deactivate a certain uplink reference signal resource of the terminal, but instructs the second device to activate or deactivate the first uplink reference signal resource associated with the first bandwidth of the terminal, it is convenient for the second device to accurately determine to specifically activate or deactivate the first uplink reference signal resource associated with the first bandwidth, which is conducive to avoiding the difficulty in accurately determining the uplink reference signal resource that needs to be activated or deactivated for the terminal when the terminal sends the uplink reference signal by using bandwidth aggregation.

In combination with some embodiments of the second aspect, in some embodiments, the first device includes a core network device, and the second device includes an access network device.

In the above embodiment, the core network device may send the first indication information to the access network device so that the access network device can accurately determine the resource of the uplink reference signal that needs to be activated or deactivated for the terminal.

In combination with some embodiments of the second aspect, in some embodiments, the first device includes a central unit access network device, and the second device includes a distributed unit access network device.

In the above embodiment, the central unit access network device may send the first indication information to the distributed unit access network device so that the distributed unit access network device can accurately determine the resource of the uplink reference signal that needs to be activated or deactivated for the terminal.

In combination with some embodiments of the second aspect, in some embodiments, the first indication information includes at least one of the following: bandwidth information; and uplink reference signal resource information.

In the above embodiment, the second device can determine the first uplink reference signal resource that needs to be activated or deactivated according to the uplink reference signal resource information, so that the first uplink reference signal resource associated with the first bandwidth of the terminal can be accurately activated or deactivated based on the bandwidth information and the uplink reference signal resource information.

In combination with some embodiments of the second aspect, in some embodiments, the bandwidth information includes at least one of the following: a frequency band identifier; bandwidth part information; a common reference point of resource block grids; an absolute frequency position of a reference resource block; an offset relative to the reference point; a carrier bandwidth; and a cell identifier.

In the above embodiments, the indication of the bandwidth information can be implemented in a variety of ways, which is conducive to improving the flexibility of indicating the bandwidth information.

In combination with some embodiments of the second aspect, in some embodiments, the uplink reference signal resource information includes at least one of the following: an identifier of an uplink reference signal resource set; an identifier of an uplink reference signal resource; an identifier of an uplink reference signal resource trigger.

In the above embodiments, the indication of the uplink reference signal resource information can be implemented in a variety of ways, which is conducive to improving the flexibility of indicating the uplink reference signal resource information.

In combination with some embodiments of the second aspect, in some embodiments, the first bandwidth is one bandwidth or multiple bandwidths.

In combination with some embodiments of the second aspect, in some embodiments, the first uplink reference signal resource is one uplink reference signal resource or multiple uplink reference signal resources.

In the above embodiment, the first indication information may indicate activation or deactivation of multiple uplink reference signal resources respectively associated with the multiple bandwidths, thereby improving the flexibility of indicating activation and deactivation operations.

In combination with some embodiments of the second aspect, in some embodiments, the first indication information is carried in at least one of the following: a new air interface positioning protocol A message; or an F1AP message.

In the above embodiment, the first indication information may be carried by an existing new air interface positioning protocol A message or F1AP message, which is beneficial to saving communication resources.

In combination with some embodiments of the second aspect, in some embodiments, the method further includes: sending second indication information to the terminal, where the second indication information is used to instruct the terminal to activate or deactivate a first uplink reference signal resource associated with a second bandwidth.

In the above embodiment, since the second indication information does not only instruct the terminal to activate or deactivate a certain uplink reference signal resource, but instructs the terminal to activate or deactivate the first uplink reference signal resource associated with the second bandwidth, it is convenient for the terminal to accurately determine to specifically activate or deactivate the first uplink reference signal resource associated with the first bandwidth, which is conducive to avoiding the difficulty in accurately determining the uplink reference signal resource that needs to be activated or deactivated for the terminal when the terminal sends the uplink reference signal by using bandwidth aggregation.

In combination with some embodiments of the second aspect, in some embodiments, the second indication information includes at least one of the following: a cell identifier; bandwidth information; uplink reference signal resource information; and a spatial relation indication.

In the above embodiment, the terminal can determine the first uplink reference signal resource that needs to be activated or deactivated according to the uplink reference signal resource information, so that the first uplink reference signal resource associated with the first bandwidth of the terminal can be accurately activated or deactivated based on the bandwidth information and the uplink reference signal resource information. Furthermore, after the first uplink reference signal resource associated with the first bandwidth is activated, communication can be performed on the first uplink reference signal resource associated with the first bandwidth according to the spatial relation indicated by the spatial relation indication.

In combination with some embodiments of the second aspect, in some embodiments, the second indication information is carried in at least one of the following: a media access control control element; downlink control information.

In the above embodiment, the first indication information may be carried by an existing media access control control element or downlink control information, which is beneficial to saving communication resources.

In a third aspect, an embodiment of the present disclosure proposes an activation control method, including: receiving second indication information sent by a second device, where the second indication information is used to instruct the terminal to activate or deactivate a first uplink reference signal resource associated with a second bandwidth; and activating or deactivating the first uplink reference signal resource associated with the second bandwidth.

In the above embodiment, since the second indication information does not only instruct the terminal to activate or deactivate a certain uplink reference signal resource, but instructs the terminal to activate or deactivate the first uplink reference signal resource associated with the second bandwidth, it is convenient for the terminal to accurately determine to specifically activate or deactivate the first uplink reference signal resource associated with the first bandwidth, which is conducive to avoiding the difficulty in accurately determining the uplink reference signal resource that needs to be activated or deactivated for the terminal when the terminal sends the uplink reference signal by using bandwidth aggregation.

In combination with some embodiments of the third aspect, in some embodiments, the second indication information includes at least one of the following: a cell identifier; bandwidth information; uplink reference signal resource information; and a spatial relation indication.

In the above embodiment, the terminal can determine the first uplink reference signal resource that needs to be activated or deactivated according to the uplink reference signal resource information, so that the first uplink reference signal resource associated with the first bandwidth of the terminal can be accurately activated or deactivated based on the bandwidth information and the uplink reference signal resource information. Furthermore, after activating the first uplink reference signal resource associated with the first bandwidth, communication can be performed on the first uplink reference signal resource associated with the first bandwidth according to the spatial relation indicated by the spatial relation indication.

In combination with some embodiments of the third aspect, in some embodiments, the bandwidth information includes at least one of the following: a frequency band identifier; bandwidth part information; a common reference point of resource block grids; an absolute frequency position of a reference resource block; an offset relative to the reference point; a carrier bandwidth; and a cell identifier.

In the above embodiments, the indication of bandwidth information can be implemented in a variety of ways, which is conducive to improving the flexibility of indicating the bandwidth information.

In combination with some embodiments of the third aspect, in some embodiments, the uplink reference signal resource information includes at least one of the following: an identifier of an uplink reference signal resource set; an identifier of an uplink reference signal resource; an identifier of an uplink reference signal resource trigger.

In the above embodiments, the indication of the uplink reference signal resource information can be implemented in a variety of ways, which is conducive to improving the flexibility of indicating the uplink reference signal resource information.

In combination with some embodiments of the third aspect, in some embodiments, the second bandwidth is one bandwidth or multiple bandwidths.

In combination with some embodiments of the third aspect, in some embodiments, the first uplink reference signal resource is one uplink reference signal resource or multiple uplink reference signal resources.

In the above embodiment, the second indication information may indicate activation or deactivation of multiple uplink reference signal resources respectively associated with the multiple bandwidths, thereby improving the flexibility of indicating activation and deactivation operations.

In a fourth aspect, an embodiment of the present disclosure proposes an activation control apparatus, including: a sending module, configured to send first indication information to a second device, where the first indication information is used to instruct the second device to activate or deactivate a first uplink reference signal resource associated with a first bandwidth of a terminal.

In a fifth aspect, an embodiment of the present disclosure provides an activation control apparatus, including: a receiving module, configured to receive first indication information sent by a first device, where the first indication information is used to instruct the second device to activate or deactivate a first uplink reference signal resource associated with a first bandwidth of a terminal.

In a sixth aspect, an embodiment of the present disclosure proposes an activation control apparatus, which includes: a receiving module, configured to receive second indication information sent by a second device, where the second indication information is used to instruct the terminal to activate or deactivate a first uplink reference signal resource associated with a second bandwidth; and activate or deactivate the first uplink reference signal resource associated with the second bandwidth.

In a seventh aspect, an embodiment of the present disclosure proposes a communication device, where the communication device includes: one or more processors; one or more memories for storing instructions; where the processor is configured to call the instructions so that the communication device performs the activation control method described in the first aspect and the second aspect, and the optional implementations of the first aspect and the second aspect.

In an eighth aspect, an embodiment of the present disclosure proposes a communication system, which includes: a first device and a second device; where the first device is configured to perform the method described in the first aspect and the second aspect, and the optional implementations of the first aspect and the second aspect, and the second device is configured to perform the method described in the first aspect and the second aspect, and the optional implementations of the first aspect and the second aspect.

In a ninth aspect, an embodiment of the present disclosure proposes a storage medium, where the storage medium stores instructions. When the instructions are executed on a communication device, the communication device performs the method described in the first and second aspects, and the optional implementations of the first and second aspects.

In a tenth aspect, an embodiment of the present disclosure proposes a program product. When the program product is executed by a communication device, the communication device performs the method described in the first and second aspects and the optional implementations of the first and second aspects.

In an eleventh aspect, an embodiment of the present disclosure proposes a computer program, which, when executed on a computer, enables the computer to perform the method described in the first and second aspects, and the optional implementations of the first and second aspects.

It is understandable that the activation control apparatus, communication device, communication system, storage medium, program product, and computer program are all used to perform the methods proposed in the embodiments of the present disclosure. Therefore, the beneficial effects that can be achieved can refer to the beneficial effects in the corresponding methods, which will not be repeated here.

The embodiments of the present disclosure provide an activation control method, apparatus, communication apparatus, and storage medium. In some embodiments, the activation control method, information processing method, communication method, and other terms can be interchangeable, the activation control apparatus, information processing apparatus, communication apparatus, and other terms can be interchangeable, and the information processing system, communication system, and other terms can be interchangeable.

The embodiments of the present disclosure are not exhaustive, but are only illustrative of some embodiments, and are not intended to be a specific limitation on the scope of protection of the present disclosure. In the absence of contradiction, each step in a certain embodiment can be implemented as an independent embodiment, and the steps can be arbitrarily combined. For example, a solution after removing some steps in a certain embodiment can also be implemented as an independent embodiment, and the order of the steps in a certain embodiment can be arbitrarily exchanged. In addition, the optional implementations in a certain embodiment can be arbitrarily combined; in addition, the embodiments can be arbitrarily combined, for example, some or all of the steps of different embodiments can be arbitrarily combined, and a certain embodiment can be arbitrarily combined with the optional implementations of other embodiments.

In each embodiment of the present disclosure, unless otherwise specified or there is a logical conflict, the terms and/or descriptions between the embodiments are consistent and can be referenced to each other, and the technical features in different embodiments can be combined to form a new embodiment based on their internal logical relationships.

The terms used in the embodiments of the present disclosure are only for the purpose of describing specific embodiments and are not intended to limit the present disclosure.

In the embodiments of the present disclosure, unless otherwise specified, elements expressed in the singular form, such as "a", "an", "the", "said", "forementioned", "this", etc. may mean "one and only one", or "one or more", or "at least one", etc.

For example, when using articles such as "a", "an", "the" in English in translation, the noun following the article can be understood as a singular expression or a plural expression.

In the embodiments of the present disclosure, "multiple/plurality" refers to two or more.

In some embodiments, the terms "at least one of", "one or more", "a plurality of", "multiple", etc. can be used interchangeably.

In some embodiments, "at least one of A and B", "A and/or B", "A in one case, B in another case", "in response to one case A, in response to another case B", etc., may include the following technical solutions according to the situation: in some embodiments, A (A is executed independently of B); in some embodiments, B (B is executed independently of A); in some embodiments, execution is selected from A and B (A and B are selectively executed); in some embodiments, A and B (both A and B are executed). When there are A, B, C, and other more branches, the above is also similar.

In some embodiments, the recording manner of "A or B" may include the following technical solutions according to the situation: in some embodiments, A (A is executed independently of B); in some embodiments, B (B is executed independently of A); in some embodiments, execution is selected from A and B (A and B are selectively executed). When there are A, B, C, and other more branches, it is similar to the above.

The prefixes such as "first" and "second" in the embodiments of the present disclosure are only used to distinguish different description objects, and do not constitute restrictions on the position, order, priority, quantity or content of the description objects. The statement of the description object refers to the description in the context of the claims or embodiments, and the use of prefixes does not constitute unnecessary restrictions. For example, if the description object is a "field", the ordinal number before the "field" in the "first field" and the "second field" does not limit the position or order between the "fields", and the "first" and "second" do not limit whether the "fields" they modify are in the same message, nor do they limit the order of the "first field" and the "second field". For another example, if the description object is a "level", the ordinal number before the "level" in the "first level" and the "second level" does not limit the priority between the "levels". For another example, the number of description objects is not limited by the ordinal number, and can be one or more. Taking the "first apparatus" as an example, the number of "apparatus" can be one or more. In addition, the objects modified by different prefixes may be the same or different. For example, if the description object is "apparatus", then the "first apparatus" and the "second apparatus" may be the same apparatus or different apparatuses, and their types may be the same or different. For another example, if the description object is "information", then the "first information" and the "second information" may be the same information or different information, and their contents may be the same or different.

In some embodiments, "including A", "containing A", "used to indicate A", and "carrying A" can be interpreted as directly carrying A or indirectly indicating A.

In some embodiments, terms such as "in response to...", "in response to determining...", "in the case of...", "at the time of...", "when...", "in a case that...", "if...", etc. can be used interchangeably.

In some embodiments, terms such as "greater than", "greater than or equal to", "not less than", "more than", "more than or equal to", "not less than", "higher than", "higher than or equal to", "not lower than", and "above" can be replaced with each other, and terms such as "less than", "less than or equal to", "not greater than", "less than", "less than or equal to", "no more than", "lower than", "lower than or equal to", "not higher than", and "below" can be replaced with each other.

In some embodiments, apparatuses and the like can be interpreted as physical or virtual, and their names are not limited to those in the embodiments.

The recorded names, such as "apparatus", "equipment", "device", "circuit", "network element", "node", "function", "unit", "section", "system", "network", "chip", "chip system", "entity" and "subject", may be used interchangeably.

In some embodiments, "network" may be interpreted as an apparatus included in the network (e.g., an access network device, a core network device, etc.).

In some embodiments, the terms "access network device (AN device), "radio access network device (RAN device)", "base station (BS)", "radio base station ", "fixed station", "node", "access point", "transmission point (TP)", "reception point (RP)", "transmission/reception point (TRP)", "panel", "antenna panel", "antenna array", "cell", "macro cell", "small cell", "femto cell", "pico cell)", "sector", "cell group", "serving cell", "carrier", "component carrier", "bandwidth part (BWP)" and so on can be used interchangeably.

In some embodiments, the terms "terminal", "terminal device", "user equipment (UE)", "user terminal" "mobile station (MS)", "mobile terminal (MT)", subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client and the like can be used interchangeably.

In some embodiments, the access network device, the core network device, or the network device can be replaced by a terminal. For example, the various embodiments of the present disclosure can also be applied to a structure in which the communication between the access network device, the core network device, or the network device and the terminal is replaced by the communication between multiple terminals (for example, device-to-device (D2D), vehicle-to-everything (V2X), etc.). In this case, it can also be set as a structure in which the terminal has all or part of the functions of the access network device. In addition, terms such as "uplink" and "downlink" can also be replaced by terms corresponding to communication between terminals (for example, "side"). For example, uplink channels, downlink channels, etc. can be replaced by side channels, and uplinks, downlinks, etc. can be replaced by sidelinks.

In some embodiments, the terminal may be replaced by an access network device, a core network device, or a network device. In this case, the access network device, the core network device, or the network device may also be configured to have a structure that has all or part of the functions of the terminal.

In some embodiments, acquisition of data, information, etc. may comply with the laws and regulations of the located country.

In some embodiments, data, information, etc. may be obtained with the user's consent.

In addition, each element, each row, or each column in the table of the embodiments of the present disclosure may be implemented as an independent embodiment, and the combination of any elements, any rows, and any columns may also be implemented as an independent embodiment.

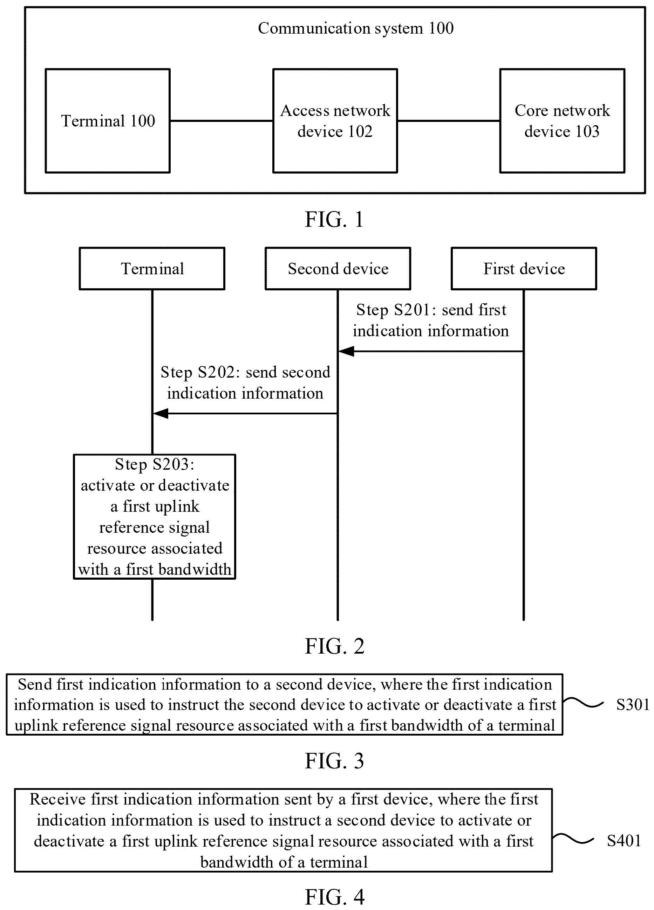

FIG. 1 is a schematic diagram of an architecture of a communication system according to an embodiment of the present disclosure.

As shown in FIG. 1, a communication system 100 includes a terminal 101, a first device and a second device. For example, the first device may include a core network device 103, and the second device may include an access network device 102.

In some embodiments, the terminal 101 includes, for example, at least one of a mobile phone, a wearable device, an Internet of Things device, a car with communication function, a smart car, a tablet computer (Pad), a computer with wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, and a wireless terminal device in a smart home, but is not limited thereto.

In some embodiments, the access network device 102 is, for example, at least one of a node or device that accesses a terminal to a wireless network. The access network device may include an evolved Node B (eNB), a next generation evolved Node B (ng-eNB), a next generation Node B (gNB), a node B (NB), a home node B (HNB), a home evolved node B (HeNB), a wireless backhaul device, a radio network controller (RNC), a base station controller (BSC), a base transceiver station (BTS), a base band unit (BBU), a mobile switching center, a base station in a 6G communication system, an open base station (Open RAN), a cloud base station (Cloud RAN), a base station in other communication systems, and an access node in a Wi-Fi system, but is not limited thereto.

In some embodiments, the technical solution of the present disclosure may be applicable to the Open RAN architecture. In this case, the interfaces between access network devices or within access network devices involved in the embodiments of the present disclosure may become internal interfaces of Open RAN, and the processes and information interactions between these internal interfaces may be implemented through software or programs.

In some embodiments, the access network device may be composed of a central unit (CU) and a distributed unit (DU), where the CU may also be called a control unit. The CU-DU structure may be used to split the protocol layer of the access network device, with some functions of the protocol layer being centrally controlled by the CU, and the remaining part or all of the functions of the protocol layer being distributed in the DU, and the DU being centrally controlled by the CU, but not limited thereto.

It can be understood that the communication system described in the embodiments of the present disclosure is for the purpose of more clearly illustrating the technical solutions of the embodiments of the present disclosure, and does not constitute a limitation on the technical solutions proposed in the embodiments of the present disclosure. A person of ordinary skill in the art can know that with the evolution of the system architecture and the emergence of new service scenarios, the technical solutions proposed in the embodiments of the present disclosure are also applicable to similar technical problems.

The following embodiments of the present disclosure may be applied to the communication system 100 shown in FIG. 1, or some of the subjects, but are not limited thereto. The subjects shown in FIG. 1 are examples, and the communication system may include all or part of the subjects in FIG. 1, or may include other subjects other than FIG. 1. The number and form of the subjects are arbitrary, and the subjects may be physical or virtual. The connection relationship between the subjects is an example, and the subjects may be connected or disconnected. The connection may be in any manner, and may be a direct connection or an indirect connection, and may be a wired connection or a wireless connection.

The embodiments of the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), Global System for Mobile communications (GSM (registered trademark)), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), Public Land Mobile Network (PLMN) network, Device-to-Device (D2D) system, Machine to Machine (M2M) system, Internet of Things (IoT) system, Vehicle-to-Everything (V2X), systems using other communication methods, and next-generation systems based on them. In addition, multiple systems can also be combined (for example, a combination of LTE or LTE-A and 5G, etc.) for application.

In some embodiments, the network device (e.g., an access network device, a core network device, etc.) may activate or deactivate a resource used by a terminal to send an uplink reference signal. When the resource is activated, the terminal may send an uplink reference signal on the resource for the network device to perform a positioning operation, such as positioning the terminal or other device according to the received uplink reference signal. When the resource is deactivated, the terminal stops sending an uplink reference signal on the resource.

In some embodiments, the uplink reference signal includes but is not limited to a sounding reference signal (SRS). The network device may configure at least one SRS resource set for the terminal. One SRS resource set may include one or more SRS resources. The activation or deactivation of the SRS resources in the SRS resource set can be realized by the network device indicating an identifier (ID) of the SRS resource set to be activated or deactivated to the terminal.

In some embodiments, there may be some technical problems because the identifier of the SRS resource set is unique only within the corresponding bandwidth range.

Taking the bandwidth range including the BandWidth Part (BWP) as an example, the network device configures 4 SRS resource sets for the terminal in BWP#1, which are identified as 1, 2, 3 and 4. When the terminal sends SRS only in BWP#1, the identifier of the SRS resource set can be considered unique. The network device indicates any one of the identifiers 1 to 4 of the SRS resource set, and the terminal can determine the SRS resource set that needs to be activated or deactivated. For example, the network device indicates that the identifier of the SRS resource set to be deactivated is 2, and the terminal can determine that the SRS resource set that needs to be deactivated is the SRS resource set associated with BWP#1 and identified as 2.

However, in some embodiments, the terminal may send an uplink reference signal by bandwidth aggregation. In this case, the network device may configure at least one SRS resource set for the terminal on multiple aggregated bandwidths respectively, which may result in the identifier of the SRS resource set not being unique.

For example, the aggregated bandwidth includes two BWPs, namely BWP#1 and BWP#2. The network device configures 4 SRS resource sets for the terminal in BWP#1, which are identified as 1, 2, 3 and 4, and configures 3 SRS resource sets for the terminal in BWP#2, which are identified as 1, 2 and 3. When the network device indicates any one of the identifiers 1 to 3 of the SRS resource set, the terminal cannot determine the SRS resource set that needs to be activated or deactivated. For example, if the network device indicates that the identifier of the SRS resource set to be deactivated is 2, the terminal cannot determine whether the SRS resource set identified as 2 in the SRS resource set associated with BWP#1 needs to be deactivated or the SRS resource set identified as 2 in the SRS resource set associated with BWP#2 needs to be deactivated.

FIG. 2 is an interactive schematic diagram showing an activation control method according to an embodiment of the present disclosure.

As shown in FIG. 2, the activation control method includes the following steps.

In step S201, the first device sends first indication information to the second device.

In some embodiments, the second device receives the first indication information.

In some embodiments, the first indication information is used to instruct the second device to activate or deactivate a first uplink reference signal resource associated with the first bandwidth of the terminal.

In some embodiments, the first device includes a core network device, and the second device includes an access network device.

In some embodiments, the first device includes a central unit access network device, and the second device includes a distribution unit access network device.

In some embodiments, the first indication information includes bandwidth information.

In some embodiments, the first indication information includes uplink reference signal resource information.

In some embodiments, the first indication information includes bandwidth information and uplink reference signal resource information.

In some embodiments, the bandwidth information includes a frequency band identifier.

In some embodiments, the bandwidth information includes bandwidth part information.

In some embodiments, the bandwidth information includes a common reference point of resource block grids.

In some embodiments, the bandwidth information includes an absolute frequency position of a reference resource block.

In some embodiments, the bandwidth information includes an offset relative to the reference point.

In some embodiments, the bandwidth information includes a carrier bandwidth.

In some embodiments, the bandwidth information includes a cell identifier.

In some embodiments, the uplink reference signal resource information includes an identifier of an uplink reference signal resource set.

In some embodiments, the uplink reference signal resource information includes an identifier of an uplink reference signal resource.

In some embodiments, the uplink reference signal resource information includes an identifier of an uplink reference signal resource trigger.

In some embodiments, the first bandwidth is one bandwidth or multiple bandwidths.

In some embodiments, the first uplink reference signal resource is one uplink reference signal resource or multiple uplink reference signal resources.

In some embodiments, the first indication information is carried in a new air interface positioning protocol A message.

In some embodiments, the first indication information is carried in an F1AP message.

In step S202, the second device sends second indication information to the terminal.

In some embodiments, the terminal receives second indication information.

In some embodiments, the second indication information is used to instruct the terminal to activate or deactivate a first uplink reference signal resource associated with a second bandwidth.

In some embodiments, the second bandwidth is the same as the first bandwidth.

In some embodiments, the second bandwidth is a bandwidth within the first bandwidth.

In some embodiments, the second indication information includes a cell identifier.

In some embodiments, the second indication information includes bandwidth information.

In some embodiments, the second indication information includes uplink reference signal resource information.

In some embodiments, the second indication information includes a spatial relation indication.

In some embodiments, the second indication information is carried in a media access control control element.

In some embodiments, the second indication information is carried in the downlink control information.

In step S203, the terminal activates or deactivates the first uplink reference signal resource associated with the second bandwidth.

In some embodiments, when the second indication information instructs the terminal to activate the first uplink reference signal resource associated with the second bandwidth, the terminal activates the first uplink reference signal resource associated with the second bandwidth.

In some embodiments, when the second indication information instructs the terminal to deactivate the first uplink reference signal resource associated with the second bandwidth, the terminal deactivates the first uplink reference signal resource associated with the second bandwidth.

In some embodiments, the second bandwidth is one bandwidth or multiple bandwidths.

The communication method involved in the embodiments of the present disclosure may include at least one of steps S201 to S203. For example, step S201 may be implemented as an independent embodiment, step S202 may be implemented as an independent embodiment, step S203 may be implemented as an independent embodiment, step S201+step S202+step S203 may be implemented as an independent embodiment, step S201+step S202 may be implemented as an independent embodiment, step S201+step S203 may be implemented as an independent embodiment, step S202+step S203 may be implemented as an independent embodiment, but is not limited thereto.

In some embodiments, steps S201 and S202 may be executed in an exchanged order or simultaneously, steps S201 and S203 may be executed in an exchanged order or simultaneously, steps S202 and S203 may be executed in an exchanged order or simultaneously, and steps S201, S202, S203 may be executed in an exchanged order or simultaneously.

In some embodiments, step S201 is optional, and one or more of these steps may be omitted or replaced in different embodiments.

In some embodiments, step S202 is optional, and one or more of these steps may be omitted or replaced in different embodiments.

In some embodiments, step S203 is optional, and one or more of these steps may be omitted or replaced in different embodiments.

For the related implementation manners of the first device, the second device and the terminal in FIG. 2, reference may be made to the embodiments described below, and the present disclosure will not elaborate on them here.

FIG. 3 is a schematic flowchart of an activation control method according to an embodiment of the present disclosure. The activation control method shown in this embodiment may be performed by a first device, and the first device may communicate with a second device.

As shown in FIG. 3, the activation control method may include the following steps.

In step S301, first indication information is sent to a second device, where the first indication information is used to instruct the second device to activate or deactivate a first uplink reference signal resource associated with a first bandwidth of a terminal.

It should be noted that the embodiment shown in FIG. 3 may be implemented independently or in combination with at least one other embodiment in the present disclosure. The specific implementation may be selected as needed and the present disclosure is not limited thereto.

In some embodiments, when instructing the second device to activate or deactivate the first uplink reference signal resource of the terminal, the first device may send first indication information to the second device, and the first indication information may instruct the second device to activate or deactivate the first uplink reference signal resource associated with the first bandwidth of the terminal. The first uplink reference signal resource includes a resource used by the terminal to send an uplink reference signal.

Since the first indication information does not merely instruct the second device to activate or deactivate a certain uplink reference signal resource of the terminal, but instructs the second device to activate or deactivate the first uplink reference signal resource associated with the first bandwidth of the terminal, it is convenient for the second device to accurately determine to specifically activate or deactivate the first uplink reference signal resource associated with the first bandwidth, which is beneficial to avoid the difficulty in accurately determining the uplink reference signal resource that needs to be activated or deactivated for the terminal when the terminal sends the uplink reference signal by using bandwidth aggregation.

In some embodiments, bandwidth aggregation can realize resource aggregation of uplink reference signals. Taking the uplink reference signal including SRS as an example, bandwidth aggregation can realize aggregation of SRS resources in SRS resource sets configured on different carriers, or realize aggregation of SRS resources configured on different carriers.

In some embodiments, the first device includes a core network device, and the second device includes an access network device; or, the first device includes a central unit (CU) access network device, such as a gNB-CU, and the second device includes a distributed unit (DU) access network device, such as a gNB-DU.

For example, the core network device may send first indication information to the access network device, and the access network device may activate or deactivate the first uplink reference signal resource associated with the first bandwidth of the terminal according to the first indication. In some embodiments, the core network device includes but is not limited to a location management function (LMF) and an access control function (Access Management Function, AMF).

For example, in a radio access network separation architecture, the gNB-CU may send first indication information to the gNB-DU, and the gNB-DU may activate or deactivate a first uplink reference signal resource associated with the first bandwidth of the terminal according to the first indication. In some embodiments, the gNB-CU may receive the first indication information from the core network device.

The first indication information is carried in at least one of the following: a new radio positioning protocol A (NR positioning protocol A, NRPPa) message; an F1 application protocol (F1AP) message.

For example, in the case that the first device includes a core network device and the second device includes an access network device, the core network device may send the first indication information to the access network device by being carried in the NRPPa message.

For example, in the case that the first device includes a gNB-CU and the second device includes a gNB-DU, the gNB-CU may send the first indication information to the gNB-DU by being carried in the F1AP message.

The technical solutions of the present disclosure are exemplarily described below through several embodiments by taking the example that the first device includes a core network device and the second device includes an access network device (such as a base station).

In some embodiments, the terminal may send an uplink reference signal in a bandwidth aggregation manner, for example, the aggregated bandwidth includes two BWPs, namely BWP#1 and BWP#2. The terminal is configured with 4 SRS resource sets in BWP#1, and the identifiers are 1, 2, 3 and 4, respectively, that is, the uplink positioning reference signal resources associated with BWP#1 include resources in SRS resource set1, SRS resource set2, SRS resource set3 and SRS resource set4; the terminal is configured with 3 SRS resource sets in BWP#2, and the identifiers are 1, 2 and 3, respectively, that is, the uplink positioning reference signal resources associated with BWP#1 include resources in SRS resource set1, SRS resource set2 and SRS resource set3.

Exemplarily, the network device may instruct the terminal to perform bandwidth aggregation on uplink reference signal resources associated with different bandwidths, and the terminal may subsequently send the uplink reference signal simultaneously by using the aggregated resource. For example, the network device may instruct the terminal to perform bandwidth aggregation on SRS resource set 1 of BWP#1 and SRS resource set 1 of BWP#2, and the terminal may use SRS resource set 1 of BWP#1 and SRS resource set 1 of BWP#2 to send SRS simultaneously.

When the core network device needs to deactivate the SRS resource set identified as 2 in BWP#1, it can send first indication information to the base station, and the first indication information is used to instruct the base station to deactivate the SRS resource set identified as 2 in BWP#1 of the terminal. According to the first indication information, the base station can accurately determine that the SRS resource set identified as 2 in BWP#1 of the terminal needs to be deactivated.

In some embodiments, the base station may further send second indication information to the terminal, and the second indication information is used to instruct the terminal to deactivate the SRS resource set identified as 2 on BWP#1. Based on the second indication information, the terminal can accurately deactivate the SRS resource set identified as 2 on BWP#1, and then the terminal can stop using the resources in the SRS resource set identified as 2 on BWP#1 to send the uplink reference signal (such as SRS).

It should be noted that the granularity of the activated or deactivated uplink positioning reference signal resources can be a resource set, such as at least one SRS resource set, or a specific resource in a resource set, such as at least one SRS resource in at least one SRS resource set.

In some embodiments, the first indication information includes at least one of the following: bandwidth information; uplink reference signal resource information.

For example, the first indication information sent by the first device to the second device may include bandwidth information and uplink reference signal resource information.

The first device can determine the first bandwidth associated with the uplink reference signal resource that needs to be activated or deactivated according to the bandwidth information, and can determine the first uplink reference signal resource that needs to be activated or deactivated according to the uplink reference signal resource information, so that based on the bandwidth information and the uplink reference signal resource information, the first uplink reference signal resource associated with the first bandwidth of the terminal can be accurately activated or deactivated.

For example, the first indication information sent by the first device to the second device may include bandwidth information.

The first device can determine the first bandwidth associated with the uplink reference signal resource that needs to be activated or deactivated according to the bandwidth information, and the uplink reference signal resource associated with the first bandwidth that needs to be activated or deactivated can be determined according to the uplink reference signal resource information indicated by other device(s) other than the first device, or determined according to the uplink reference signal resource information agreed upon in the protocol, so that the first uplink reference signal resource associated with the first bandwidth of the terminal can be accurately activated or deactivated based on the bandwidth information and the uplink reference signal resource information.

For example, the first indication information sent by the first device to the second device may include uplink reference signal resource information.

The first device can determine the first uplink reference signal resource that needs to be activated or deactivated according to the uplink reference signal resource information, and the first bandwidth associated with the first uplink reference signal resource that needs to be activated or deactivated can be determined according to the bandwidth information indicated by other device(s) other than the first device, or determined according to the bandwidth information agreed upon in the protocol, so that the first uplink reference signal resource associated with the first bandwidth of the terminal can be accurately activated or deactivated based on the bandwidth information and the uplink reference signal resource information.

In some embodiments, the bandwidth information includes at least one of the following:
a frequency band identifier, such as a New Radio (NR) frequency band identifier, which may be referred to as FreqBandIndicatorNR;
bandwidth part information, such as BWP ID, or location and bandwidth of BWP (locationAndBandwidth), where based on the location (e.g., frequency domain location) of BWP and the bandwidth of BWP, the specific BWP can be determined;
a common reference point of resource block grids, also referred to as PointA;
an absolute frequency position of a reference resource block, which may be referred to as absolute frequency PointA;
an offset relative to a reference point;
a carrier bandwidth;
a cell identifier.

In some embodiments, the second device may determine at least one frequency band according to the frequency band identifier, and use the determined frequency band as the first bandwidth.

In some embodiments, the second device may determine at least one BWP according to the bandwidth part information, and use the determined BWP as the first bandwidth.

In some embodiments, the second device may determine the frequency domain resource (e.g., at least one resource block, at least one resource block grid) according to the common reference point of the resource block grids, and use the determined frequency domain resource as the first bandwidth. For example, the second device determines the frequency domain resource according to the common reference point of the resource block grids, and specifically, it may determine the starting position of the frequency domain resource according to the common reference point of the resource block grids and the offset relative to the reference point, and determine the range of the frequency domain resource according to the carrier bandwidth, thereby determining the frequency domain resource according to the starting position of the frequency domain resource and the range of the frequency domain resource.

In some embodiments, the second device may determine the frequency domain resource (e.g., at least one resource block, at least one reference resource block) according to the absolute frequency position of the reference resource block, and use the determined frequency domain resource as the first bandwidth. For example, the second device determines the frequency domain resource according to the absolute frequency position of the reference resource block, and specifically, it may determine the starting position of the frequency domain resource according to the absolute frequency position of the reference resource block and the offset relative to the reference point, and determine the range of the frequency domain resource according to the carrier bandwidth, thereby determining the frequency domain resource according to the starting position of the frequency domain resource and the range of the frequency domain resource.

In some embodiments, the network device may configure the frequency domain resource associated with the cell, the second device may determine the cell according to the cell identifier, and determine the frequency domain resource associated with the cell, and then determine the frequency domain resource associated with the cell as the first bandwidth. For example, the network device may configure at least one BWP for the cell, and after the second device determines the cell according to the cell identifier, it may determine at least one BWP associated with the cell, and then determine at least one BWP associated with the cell as the first bandwidth.

In some embodiments, the uplink reference signal resource information includes at least one of the following:
an identifier of an uplink reference signal resource set, such as SRS resource set ID;
an identifier of an uplink reference signal resource, such as SRS resource ID;
an identifier of an uplink reference signal resource trigger, such as SRS resource trigger ID.

In some embodiments, the uplink reference signal resource information may include an identifier of an uplink reference signal resource set. The second device may determine the uplink reference signal resource set according to the identifier of the uplink reference signal resource set, and further determine that the uplink reference signal resource associated with the first bandwidth that needs to be activated or deactivated includes the determined uplink reference signal resource set.

In some embodiments, the uplink reference signal resource information may include an identifier of the uplink reference signal resource. The second device may determine the uplink reference signal resource according to the identifier of the uplink reference signal resource, and further determine that the uplink reference signal resource associated with the first bandwidth that needs to be activated or deactivated includes the determined uplink reference signal resource.

In some embodiments, the uplink reference signal resource information may include an identifier of an uplink reference signal resource set and an identifier of an uplink reference signal resource. The second device may determine the uplink reference signal resource set where the uplink reference signal resource that needs to be activated or deactivated is located according to the identifier of the uplink reference signal resource set, and further determine the uplink reference signal resource that needs to be activated or deactivated in the uplink reference signal resource set according to the identifier of the uplink reference signal resource.

In some embodiments, the uplink reference signal sent based on bandwidth aggregation includes at least one of the following:
a semi-persistent uplink reference signal, an aperiodic uplink reference signal.

In some embodiments, the resources used to send the semi-persistent uplink reference signal can be activated or deactivated. For resources used to send the aperiodic uplink reference signal, the duration can be indicated, so only activation is required. After activation, the aperiodic uplink reference signal is sent only within the duration. When the duration ends, the sending of the aperiodic uplink reference signal can be stopped, so deactivation is not necessary.

In some embodiments, resources used to send the aperiodic uplink reference signals may also be deactivated, but the embodiments of the present disclosure are mainly described in the case where resources used to send aperiodic uplink reference signals do not need to be deactivated.

In some embodiments, after receiving the first indication information, the second device may further send second indication information to the terminal, instructing the terminal to activate or deactivate the first uplink reference signal resource associated with the second bandwidth through the second indication information. The second bandwidth may be the same as the first bandwidth, or the second bandwidth may be a bandwidth within the first bandwidth.

For example, the first indication information instructs the first node to activate the first uplink reference signal resource associated with the first bandwidth for the terminal, and the second indication information sent by the second device to the terminal can be used to instruct the terminal to activate the first uplink reference signal resource associated with the second bandwidth; for example, the first indication information instructs the first node to deactivate the first uplink reference signal resource associated with the second bandwidth for the terminal, and the second indication information sent by the second device to the terminal may be used to instruct the terminal to deactivate the first uplink reference signal resource associated with the second bandwidth.

For example, in the case where the uplink reference signal includes a semi-persistent uplink reference signal, the second device may carry the second indication information and send it to the terminal via a Media Access Control Control Element (MAC CE). The second indication information may include at least one of the following: an identifier of an uplink reference signal resource set, such as SRS resource set ID; an identifier of an uplink reference signal resource, such as SRS resource ID.

For example, in the case where the uplink reference signal includes an aperiodic uplink reference signal, the second device may send second indication information to the terminal by being carried in downlink control information (DCI), where the second indication information may include an uplink reference signal resource trigger (SRS resource trigger).

In some embodiments, the uplink reference signal resource information may include an identifier of an uplink reference signal resource trigger, for example, the uplink reference signal resource information may include an uplink reference signal resource trigger list, the list including the identifier of at least one uplink reference signal resource trigger. For example, in the case that the uplink reference signal includes an SRS, the list may be an aperiodic SRS resource trigger list (aperiodicSRS-ResourceTriggerList).

The second device can determine the identifier of the uplink reference signal resource trigger according to the first indication information, and then send the identifier of the uplink reference signal resource trigger to the terminal through the second indication information, where there is an association relationship between the identifier of the uplink reference signal resource trigger and the uplink reference signal resource, and the terminal can determine the uplink reference signal resource associated with the received identifier of the uplink reference signal resource trigger according to the association relationship, and then activate the uplink reference signal resource.

In some embodiments, the first bandwidth is one bandwidth or multiple bandwidths.

In some embodiments, the first uplink reference signal resource is one uplink reference signal resource or multiple uplink reference signal resources.

In some embodiments, in the case that the terminal sends an uplink reference signal in a bandwidth aggregation manner, resources for sending the uplink reference signal may be respectively configured on each aggregated bandwidth.

For example, the first bandwidth indicated by the first indication information may be one bandwidth, and the first uplink reference signal resource indicated may be one uplink reference signal resource, then the first indication information may indicate activation or deactivation of one uplink reference signal resource associated with the one bandwidth.

However, since the terminal sends the uplink reference signal by bandwidth aggregation, that is, the terminal can send the uplink reference signal on multiple uplink reference signal resources associated with multiple bandwidths, if the first indication information only indicates activation or deactivation of one uplink reference signal resource associated with one bandwidth, the flexibility of the indication is relatively limited.

Therefore, in some embodiments, the first bandwidth may be multiple bandwidths, and the first uplink reference signal resource may be multiple uplink reference signal resources, then the first indication information may indicate activation or deactivation of multiple uplink reference signal resources respectively associated with the multiple bandwidths. This is conducive to improving the flexibility of indicating activation and deactivation operations.

For example, the aggregated bandwidth includes two BWPs, which are respectively BWP#1 and BWP#2. The network device configures four SRS resource sets for the terminal in BWP#1, which are identified 1, 2, 3 and 4, and configures three SRS resource sets for the terminal in BWP#2, which are identified 1, 2 and 3.

The first bandwidth indicated by the first indication information may include BWP#1 and BWP#2, and the indicated first uplink reference signal resource may include SRS resource sets identified as 1 and 2 associated with BWP#1, and SRS resource sets identified as 2 and 3 associated with BWP#2. Then the second device may determine that it is necessary to activate or deactivate the SRS resource sets identified as 1 and 2 associated with BWP#1, and the SRS resource sets identified as 2 and 3 associated with BWP#2. Accordingly, activation or deactivation of multiple uplink reference signal resources associated with multiple bandwidths can be achieved, thereby improving the flexibility of indicating activation and deactivation operations.

In some embodiments, the first indication information may further include an association relationship between the first uplink reference signal resource and the first bandwidth, or may not include an association relationship between the first uplink reference signal resource and the first bandwidth.

In some embodiments, in the case that the first bandwidth is multiple bandwidths, when the identifiers of the multiple uplink reference signal resources indicated by the first indication information are different in the uplink reference signal resources associated with the multiple bandwidths, the first indication information may include an association relationship between the first uplink reference signal resource and the first bandwidth.

For example, in the case described in the above embodiment, the first indication information may include an association relationship, and the association relationship is used to indicate that the SRS resource sets identified as 1 and 2 are associated with BWP#1, and the SRS resource sets identified as 2 and 3 are associated with BWP#2, so that the second device can accurately determine that the SRS resource sets identified as 1 and 2 associated with BWP#1 and the SRS resource sets identified as 2 and 3 associated with BWP#2 are to be activated or deactivated.

In some embodiments, in the case that the first bandwidth is multiple bandwidths, when the identifiers of the first uplink reference signal resource indicated by the first indication information are the same in the uplink reference signal resource associated with each bandwidth, the first indication information may not necessarily include an association relationship between the first uplink reference signal resource and the first bandwidth.

For example, the first bandwidth indicated by the first indication information may include BWP#1 and BWP#2, and the indicated first uplink reference signal resource may include SRS resource sets identified as 1 and 2 associated with BWP#1, and SRS resource sets identified as 1 and 2 associated with BWP#2. Then the first indication information may not necessarily include an association relationship, and the second device may determine that the SRS resource sets identified as 1 and 2 refer to the SRS resource sets identified as 1 and 2 associated with BWP#1, and the SRS resource sets identified as 1 and 2 associated with BWP#2.

FIG. 4 is a schematic flowchart of an activation control method according to an embodiment of the present disclosure. The activation control method shown in this embodiment may be performed by a second device, and the second device may communicate with the first device.

As shown in FIG. 4, the activation control method may include the following steps.

In step S401, first indication information sent by a first device is received, where the first indication information is used to instruct a second device to activate or deactivate a first uplink reference signal resource associated with a first bandwidth of a terminal.

It should be noted that the embodiment shown in FIG. 4 can be implemented independently or in combination with at least one other embodiment in the present disclosure. The specific selection can be made as needed, and the present disclosure is not limited thereto.

In some embodiments, when instructing the second device to activate or deactivate the first uplink reference signal resource of the terminal, the first device may send first indication information to the second device, and the second device may determine that it is necessary to activate or deactivate the first uplink reference signal resource associated with the first bandwidth of the terminal according to the first indication information. The first uplink reference signal resource includes a resource used by the terminal to send an uplink reference signal.

Since the first indication information does not merely instruct the second device to activate or deactivate a certain uplink reference signal resource of the terminal, but instructs the second device to activate or deactivate the first uplink reference signal resource associated with the first bandwidth of the terminal, it is convenient for the second device to accurately determine to specifically activate or deactivate the first uplink reference signal resource associated with the first bandwidth, which is beneficial to avoid the difficulty in accurately determining the uplink reference signal resource that needs to be activated or deactivated for the terminal when the terminal sends the uplink reference signal by using bandwidth aggregation.

In some embodiments, the first device includes a core network device, and the second device includes an access network device; or, the first device includes a central unit access network device, and the second device includes a distribution unit access network device.

For example, the core network device may send first indication information to the access network device, and the access network device may activate or deactivate the first uplink reference signal resource associated with the first bandwidth of the terminal according to the first indication. In some embodiments, the core network device includes but is not limited to a location management function (LMF) and an access management function (AMF).

For example, in a radio access network separation architecture, the gNB-CU may send first indication information to the gNB-DU, and the gNB-DU may activate or deactivate the first uplink reference signal resource associated with the first bandwidth of the terminal according to the first indication. In some embodiments, the gNB-CU may receive the first indication information from the core network device.

The first indication information is carried in at least one of the following: a New Radio Positioning Protocol A (NRPPa) message; or an F1AP message.

For example, in the case that the first device includes a core network device and the second device includes an access network device, the core network device may send the first indication information to the access network device by being carried in an NRPPa message.

For example, in the case that the first device includes a gNB-CU and the second device includes a gNB-DU, the gNB-CU may send the first indication information to the gNB-DU by being carried in an F1AP message.

In some embodiments, the terminal may send an uplink reference signal in a bandwidth aggregation manner, for example, the aggregated bandwidth includes two BWPs, which are respectively BWP#1 and BWP#2. The terminal is configured with 4 SRS resource sets in BWP#1, which are identified as 1, 2, 3 and 4, respectively, that is, the uplink positioning reference signal resources associated with BWP#1 include resources in SRS resource set1, SRS resource set2, SRS resource set3 and SRS resource set4; the terminal is configured with 3 SRS resource sets in BWP#2, which are identified as 1, 2 and 3, respectively, that is, the uplink positioning reference signal resources associated with BWP#1 include resources in SRS resource set1, SRS resource set2 and SRS resource set3.

Exemplarily, the network device may instruct the terminal to perform bandwidth aggregation on uplink reference signal resources associated with different bandwidths, and the terminal may subsequently use the aggregated resources to send uplink reference signals at the same time. The network device may instruct the terminal to perform bandwidth aggregation on SRS resource set 1 of BWP#1 and SRS resource set 1 of BWP#2, and the terminal may use SRS resource set 1 of BWP#1 and SRS resource set 1 of BWP#2 to send SRS at the same time.

When the core network device needs to deactivate the SRS resource set identified as 2 in BWP#1, it can send first indication information to the base station, and the first indication information is used to instruct the base station to deactivate the SRS resource set identified as 2 in BWP#1 of the terminal. According to the first indication information, the base station can accurately determine that the SRS resource set identified as 2 in BWP#1 of the terminal needs to be deactivated.

In some embodiments, the first indication information includes at least one of the following: bandwidth information; uplink reference signal resource information.

For example, the first indication information sent by the first device to the second device may include bandwidth information and uplink reference signal resource information.

The first device can determine the first bandwidth associated with the uplink reference signal resource that needs to be activated or deactivated according to the bandwidth information, and can determine the first uplink reference signal resource that needs to be activated or deactivated according to the uplink reference signal resource information, so that based on the bandwidth information and the uplink reference signal resource information, the first uplink reference signal resource associated with the first bandwidth of the terminal can be accurately activated or deactivated.

For example, the first indication information sent by the first device to the second device may include bandwidth information.

The first device can determine the first bandwidth associated with the uplink reference signal resource that needs to be activated or deactivated according to the bandwidth information, and the uplink reference signal resource associated with the first bandwidth that needs to be activated or deactivated can be determined according to the uplink reference signal resource information indicated by other device(s) other than the first device, or determined according to the uplink reference signal resource information agreed upon in the protocol, so that the first uplink reference signal resource associated with the first bandwidth of the terminal can be accurately activated or deactivated based on the bandwidth information and the uplink reference signal resource information.

For example, the first indication information sent by the first device to the second device may include uplink reference signal resource information.

The first device can determine the first uplink reference signal resource that needs to be activated or deactivated according to the uplink reference signal resource information, and the first bandwidth associated with the first uplink reference signal resource that needs to be activated or deactivated can be determined according to bandwidth information indicated by other device(s) other than the first device, or according to bandwidth information agreed upon in a protocol, so that based on the bandwidth information and uplink reference signal resource information, the first uplink reference signal resource associated with the first bandwidth of the terminal can be accurately activated or deactivated.

In some embodiments, the bandwidth information includes at least one of the following:
a frequency band identifier, such as a New Radio (NR) frequency band identifier, which may be referred to as FreqBandIndicatorNR;
bandwidth part information, such as BWP ID, or location and bandwidth of BWP (locationAndBandwidth), where based on the location of BWP (e.g., frequency domain location) and the bandwidth of BWP, the specific BWP can be determined;
a common reference point of resource block grids, also referred to as PointA;
an absolute frequency position of a reference resource block, which may be referred to as an absolute frequency PointA;
an offset relative to a reference point;
a carrier bandwidth;
a cell identifier.

In some embodiments, the second device may determine at least one frequency band according to the frequency band identifier, and use the determined frequency band as the first bandwidth.

In some embodiments, the second device may determine at least one BWP according to the bandwidth part information, and use the determined BWP as the first bandwidth.

In some embodiments, the second device may determine the frequency domain resource (e.g., at least one resource block, at least one resource block grid) according to a common reference point of resource block grids, and use the determined frequency domain resource as the first bandwidth. For example, the second device determines the frequency domain resource according to the common reference point of the resource block grids, and specifically, it may determine the starting position of the frequency domain resource according to the common reference point of the resource block grids and the offset relative to the reference point, and determine the range of the frequency domain resource according to the carrier bandwidth, thereby determining the frequency domain resource according to the starting position of the frequency domain resource and the range of the frequency domain resource.

In some embodiments, the second device may determine the frequency domain resource (e.g., at least one resource block, at least one reference resource block) according to the absolute frequency position of the reference resource block, and use the determined frequency domain resource as the first bandwidth. For example, the second device determines the frequency domain resource according to the absolute frequency position of the reference resource block, and specifically, it may determine the starting position of the frequency domain resource according to the absolute frequency position of the reference resource block and the offset relative to the reference point, and determine the range of the frequency domain resource according to the carrier bandwidth, thereby determining the frequency domain resource according to the starting position of the frequency domain resource and the range of the frequency domain resource.

In some embodiments, the network device may configure a frequency domain resource associated with a cell, the second device may determine the cell according to a cell identifier, and determine the frequency domain resource associated with the cell, and then determine the frequency domain resource associated with the cell as the first bandwidth. For example, the network device may configure at least one BWP for the cell, and after the second device determines the cell according to the cell identifier, it may determine at least one BWP associated with the cell, and then determine the at least one BWP associated with the cell as the first bandwidth.

In some embodiments, the uplink reference signal resource information includes at least one of the following:
an identifier of an uplink reference signal resource set, such as SRS resource set ID;
an identifier of an uplink reference signal resource, such as SRS resource ID;
an identifier of an uplink reference signal resource trigger, for example, SRS resource trigger ID.

In some embodiments, the uplink reference signal resource information may include an identifier of an uplink reference signal resource set. The second device may determine the uplink reference signal resource set according to the identifier of the uplink reference signal resource set, and further determine that the uplink reference signal resource associated with the first bandwidth that needs to be activated or deactivated includes the determined uplink reference signal resource set.

In some embodiments, the uplink reference signal resource information may include an identifier of the uplink reference signal resource. The second device may determine the uplink reference signal resource according to the identifier of the uplink reference signal resource, and further determine that the uplink reference signal resource associated with the first bandwidth that needs to be activated or deactivated includes the determined uplink reference signal resource.

In some embodiments, the uplink reference signal resource information may include an identifier of an uplink reference signal resource set and an identifier of an uplink reference signal resource. The second device may determine the uplink reference signal resource set where the uplink reference signal resource that needs to be activated or deactivated is located according to the identifier of the uplink reference signal resource set, and further determine the uplink reference signal resource that needs to be activated or deactivated in the uplink reference signal resource set according to the identifier of the uplink reference signal resource.

In some embodiments, the uplink reference signal sent based on bandwidth aggregation includes at least one of the following:
a semi-persistent uplink reference signal, and an aperiodic uplink reference signal.

In some embodiments, resources used to send semi-persistent uplink reference signals can be activated or deactivated. For resources used to send aperiodic uplink reference signals, the duration can be indicated, so only activation is required. After activation, the aperiodic uplink reference signal is sent only within the duration. When the duration ends, the sending of the aperiodic uplink reference signal can be stopped, so deactivation is not necessary.

In some embodiments, resources used to send aperiodic uplink reference signals may also be deactivated, but the embodiments of the present disclosure are mainly described in the case where resources used to send aperiodic uplink reference signals do not need to be deactivated.

In some embodiments, after receiving the first indication information, the second device may further send second indication information to the terminal, and instruct the terminal to activate or deactivate the first uplink reference signal resource associated with the second bandwidth through the second indication information.

In some embodiments, the second indication information is carried in at least one of the following: a media access control control element; downlink control information.

For example, in the case where the uplink reference signal includes a semi-persistent uplink reference signal, the second device may carry the second indication information via a media access control control element (MAC CE) and send it to the terminal. The second indication information may include at least one of the following: an identifier of an uplink reference signal resource set, such as an SRS resource set ID; an identifier of an uplink reference signal resource, such as an SRS resource ID.

For example, in the case where the uplink reference signal includes an aperiodic uplink reference signal, the second device may carry the second indication information via downlink control information (DCI) and send it to the terminal, where the second indication information may include an uplink reference signal resource trigger (SRS resource trigger).

In some embodiments, the uplink reference signal resource information may include an identifier of an uplink reference signal resource trigger, for example, the uplink reference signal resource information may include an uplink reference signal resource trigger list, the list including an identifier of at least one uplink reference signal resource trigger. For example, in the case that the uplink reference signal includes an SRS, the list may be an aperiodic SRS resource trigger list (aperiodicSRS-ResourceTriggerList).

The second device can determine the identifier of the uplink reference signal resource trigger according to the first indication information, and then send the identifier of the uplink reference signal resource trigger to the terminal through the second indication information, where there is an association relationship between the identifier of the uplink reference signal resource trigger and the uplink reference signal resource, and the terminal can determine the uplink reference signal resource associated with the received identifier of the uplink reference signal resource trigger according to the association relationship, and then activate the uplink reference signal resource.

In some embodiments, the first bandwidth is one bandwidth or multiple bandwidths.

In some embodiments, the first uplink reference signal resource is one uplink reference signal resource or multiple uplink reference signal resources.

In some embodiments, in the case that the terminal sends an uplink reference signal in a bandwidth aggregation manner, resources for sending the uplink reference signal may be respectively configured on each aggregated bandwidth.

For example, the first bandwidth indicated by the first indication information may be one bandwidth, and the first uplink reference signal resource indicated may be one uplink reference signal resource, then the first indication information may indicate activation or deactivation of one uplink reference signal resource associated with the one bandwidth.

However, since the terminal sends the uplink reference signal by bandwidth aggregation, that is, the terminal can send the uplink reference signal on multiple uplink reference signal resources associated with multiple bandwidths, if the first indication information only indicates activation or deactivation of one uplink reference signal resource associated with one bandwidth, the flexibility of the indication is relatively limited.

Therefore, in some embodiments, the first bandwidth may be multiple bandwidths, and the first uplink reference signal resource may be multiple uplink reference signal resources, then the first indication information may indicate activation or deactivation of multiple uplink reference signal resources respectively associated with the multiple bandwidths. This is conducive to improving the flexibility of indicating activation and deactivation operations.

For example, the aggregated bandwidth includes two BWPs, which are respectively BWP#1 and BWP#2. The network device configures four SRS resource sets for the terminal in BWP#1, which are identified as 1, 2, 3 and 4, and configures three SRS resource sets for the terminal in BWP#2, which are identified as 1, 2 and 3.

The first bandwidth indicated by the first indication information may include BWP#1 and BWP#2, and the indicated first uplink reference signal resource may include SRS resource sets identified as 1 and 2 associated with BWP#1, and SRS resource sets identified as 2 and 3 associated with BWP#2. Then the second device may determine that it is necessary to activate or deactivate the SRS resource sets identified as 1 and 2 associated with BWP#1, and the SRS resource sets identified as 2 and 3 associated with BWP#2. Accordingly, activation or deactivation of multiple uplink reference signal resources associated with multiple bandwidths can be achieved, thereby improving the flexibility of indicating activation and deactivation operations.

In some embodiments, the first indication information may further include an association relationship between the first uplink reference signal resource and the first bandwidth, or may not include an association relationship between the first uplink reference signal resource and the first bandwidth.

In some embodiments, in the case that the first bandwidth is multiple bandwidths, when the multiple uplink reference signal resources indicated by the first indication information are identified differently in the uplink reference signal resources associated with the multiple bandwidths, the first indication information may include an association relationship between the first uplink reference signal resource and the first bandwidth.

For example, in the case described in the above embodiment, the first indication information may include an association relationship, and the association relationship is used to indicate that the SRS resource sets identified as 1 and 2 are associated with BWP#1, and the SRS resource sets identified as 2 and 3 are associated with BWP#2, so that the second device can accurately determine to specifically activate or deactivate the SRS resource sets identified as 1 and 2 associated with BWP#1, and the SRS resource sets identified as 2 and 3 associated with BWP#2.

In some embodiments, in the case that the first bandwidth is multiple bandwidths, when the first uplink reference signal resources indicated by the first indication information are identified identically in the uplink reference signal resource associated with each bandwidth, the first indication information may not necessarily include an association relationship between the first uplink reference signal resource and the first bandwidth.

For example, the first bandwidth indicated by the first indication information may include BWP#1 and BWP#2, and the indicated first uplink reference signal resource may include SRS resource sets identified as 1 and 2 associated with BWP#1, and SRS resource sets identified as 1 and 2 associated with BWP#2. Then the first indication information may not necessarily include an association relationship, and the second device may determine that the SRS resource sets identified as 1 and 2 refer to the SRS resource sets identified as 1 and 2 associated with BWP#1, and the SRS resource sets identified as 1 and 2 associated with BWP#2.

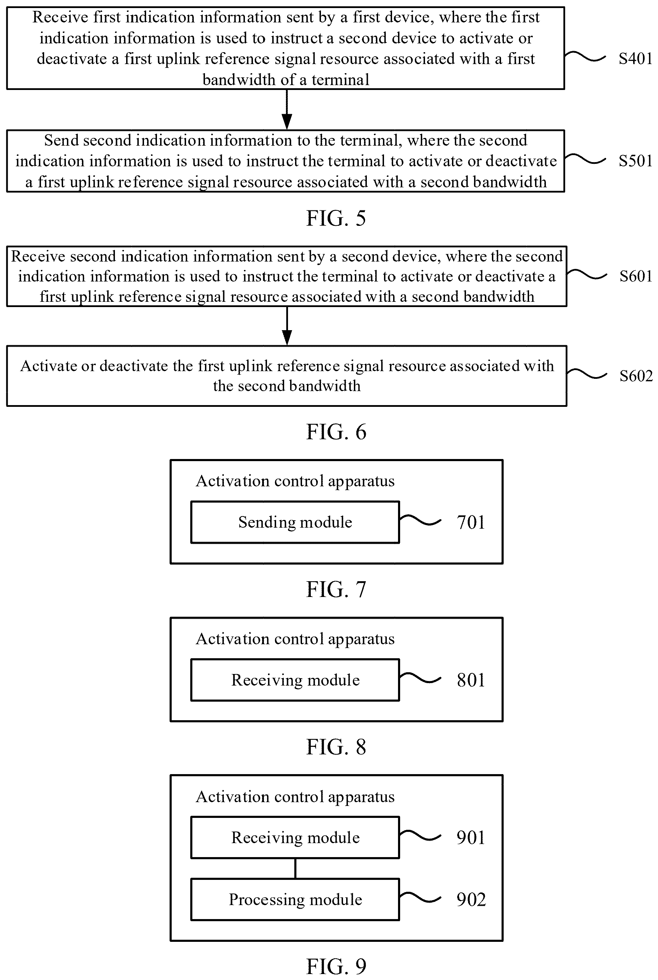

FIG. 5 is a schematic flowchart of another activation control method according to an embodiment of the present disclosure. The activation control method shown in this embodiment can be performed by a second device. As shown in FIG. 5, the activation control method further includes the following step.

In step S501, second indication information is sent to a terminal, where the second indication information is used to instruct the terminal to activate or deactivate a first uplink reference signal resource associated with a second bandwidth. The second bandwidth may be the same as the first bandwidth, or the second bandwidth may be a bandwidth within the first bandwidth.

It should be noted that the embodiment shown in FIG. 5 can be implemented independently or in combination with at least one other embodiment in the present disclosure. The specific selection can be made as needed, and the present disclosure is not limited thereto.

In some embodiments, after the base station determines to activate or deactivate the first uplink reference signal resource associated with the first bandwidth for the terminal according to the first indication information, it can determine the second bandwidth, where the second bandwidth can be the same as the first bandwidth, or the second bandwidth can be a bandwidth within the first bandwidth.

Further, the base station may send second indication information to the terminal, and instruct the terminal to activate or deactivate the first uplink reference signal resource associated with the second bandwidth through the second indication information. After receiving the second indication information, the terminal may determine that the first uplink reference signal resource associated with the second bandwidth needs to be activated or deactivated. For example, the second indication information instructs the terminal to activate the first uplink reference signal resource associated with the second bandwidth, and the terminal may activate the first uplink reference signal resource associated with the second bandwidth according to the second indication information; for example, the second indication information instructs the terminal to deactivate the first uplink reference signal resource associated with the second bandwidth, and the terminal may deactivate the first uplink reference signal resource associated with the second bandwidth according to the second indication information.

For example, the second indication information is used to instruct the terminal to deactivate the SRS resource set identified as 2 on BWP#1. Based on the second indication information, the terminal can accurately deactivate the SRS resource set identified as 2 on BWP#1, and then the terminal can stop using the resource in the SRS resource set identified as 2 on BWP#1 to send the uplink reference signal (such as SRS).

For example, the second indication information is used to instruct the terminal to activate or deactivate the SRS resource set identified as 2 on BWP#1 and the SRS resource set identified as 2 on BWP#2 at the same time. Based on the second indication information, the terminal can accurately deactivate the SRS resource set identified as 2 on BWP#1 and the SRS resource set identified as 2 on BWP#2, and then the terminal can stop using the resources in the SRS resource set identified as 2 on BWP#1 and the SRS resource set identified as 2 on BWP#2 to send the uplink reference signal (such as SRS). Exemplarily, the second indication information can be carried in a MAC CE, and the second device is a base station, then the base station can activate or deactivate the uplink reference signals of multiple BWPs (such as BWP#1 and BWP#2) through one MAC CE.

It should be noted that the granularity of the activated or deactivated uplink positioning reference signal resources can be a resource set, such as at least one SRS resource set, or a specific resource in a resource set, such as at least one SRS resource in at least one SRS resource set.

In some embodiments, the second indication information includes at least one of the following:
a cell identifier;
bandwidth information;
uplink reference signal resource information;
spatial relation indication.

In some embodiments, the second indication information may include at least one cell identifier. The frequency domain resource associated with the cell is configured. After receiving the second indication information, the terminal may determine at least one cell according to at least one cell identifier in the second indication information, and determine the frequency domain resource associated with each cell in the at least one cell, and then determine the frequency domain resource associated with the cell as the second bandwidth.

Exemplarily, when the second indication information includes only one cell identifier, the second bandwidth associated with the cell corresponding to the cell identifier may be at least two bandwidths, such as at least two BWPs, at least two frequency point identifiers, at least two point As and corresponding offset values relative to point As. Accordingly, activation or deactivation of uplink reference signals of multiple bandwidths can be achieved through one piece of second indication information.

Exemplarily, when the second indication information includes multiple cell identifiers, the second bandwidth associated with the cell corresponding to each cell identifier may be at least one bandwidth. Taking multiple cell identifiers including Cell ID1 and Cell ID2 as an example, for example, cell ID1 is associated with BWP1, and cell ID 2 is associated with BWP2. Accordingly, activation or deactivation of uplink reference signals of multiple bandwidths can be achieved through one piece of second indication information.

In some embodiments, the second indication information may include at least two pieces of bandwidth information. After receiving the second indication information, the terminal may determine the bandwidth associated with the uplink positioning reference signal according to the at least two pieces of bandwidth information in the second indication information. Exemplarily, the second indication information may include at least 2 pieces of BWP information, or at least 2 pieces of cell identifier information, or at least 2 pieces of frequency band identifier information. Accordingly, the activation or deactivation of uplink reference signals of multiple bandwidths can be achieved through one piece of second indication information.

In some embodiments, the second indication information may include at least two pieces of uplink reference signal resource information, such as two SRS resource sets, and each SRS resource set is associated with one bandwidth. After receiving the second indication information, the terminal may determine the uplink positioning reference signal that needs to be activated or deactivated according to the uplink reference signal resource information and its associated bandwidth in the second indication information.

For example, after the base station determines that it is necessary to activate the SRS resource sets with identifiers 1 and 2 associated with BWP#1 and the SRS resource sets with identifiers 1 and 2 associated with BWP#2 according to the first indication information, the second bandwidth may be determined. For example, the second bandwidth is the same as the first bandwidth and also includes BWP#1 and BWP#2. The base station may send the second indication information to the terminal to instruct the terminal to activate the SRS resource sets with identifiers 1 and 2 associated with BWP#1 and the SRS resource sets with identifiers 1 and 2 associated with BWP#2. According to the second indication information, the terminal may activate the SRS resource sets with identifiers 1 and 2 associated with BWP#1 and the SRS resource sets with identifiers 1 and 2 associated with BWP#2.

In some embodiments, the second indication information may include only one spatial relation indication, or may include multiple spatial relation indications, where the spatial relation indication is used to indicate a spatial relation.

For example, in the case where the second indication information includes one spatial relation indication, the terminal can communicate based on the spatial relation indicated by the one spatial relation indication on each bandwidth indicated by the second indication.

For example, in the case where the second indication information includes multiple spatial relation indications, each bandwidth corresponds to one spatial relation indication, and the terminal can determine the spatial relation corresponding to each indicated bandwidth according to the second indication.

In some embodiments, the bandwidth information includes at least one of the following:
a frequency band identifier, such as a new air interface frequency band identifier, which may be referred to as FreqBandIndicatorNR;
bandwidth part information, such as BWP ID, or the location and bandwidth of the BWP, where based on the location of the BWP (e.g., frequency domain location) and the bandwidth of the BWP, the specific BWP can be determined;
a common reference point of resource block grids, also referred to as PointA;
an absolute frequency position of a reference resource block, which may be referred to as absolute frequency PointA;
an offset relative to the reference point;
a carrier bandwidth;
a cell identifier.

In some embodiments, the terminal may determine at least one frequency band according to the frequency band identifier, and use the determined frequency band as the second bandwidth.

In some embodiments, the terminal may determine at least one BWP according to the bandwidth part information, and use the determined BWP as the second bandwidth.

In some embodiments, the terminal may determine the frequency domain resource (e.g., at least one resource block, at least one resource block grid) according to the common reference point of the resource block grids, and use the determined frequency domain resource as the second bandwidth. For example, the terminal determines the frequency domain resource according to the common reference point of the resource block grids, and specifically, it may determine the starting position of the frequency domain resource according to the common reference point of the resource block grids and the offset relative to the reference point, and determines the range of the frequency domain resource according to the carrier bandwidth, thereby determining the frequency domain resource according to the starting position of the frequency domain resource and the range of the frequency domain resource.

In some embodiments, the terminal may determine the frequency domain resource (e.g., at least one resource block, at least one reference resource block) according to the absolute frequency position of the reference resource block, and use the determined frequency domain resource as the second bandwidth. For example, the terminal determines the frequency domain resource according to the absolute frequency position of the reference resource block, and specifically, it may determine the starting position of the frequency domain resource based on the absolute frequency position of the reference resource block and the offset relative to the reference point, and determines the range of the frequency domain resource according to the carrier bandwidth, thereby determining the frequency domain resource according to the starting position of the frequency domain resource and the range of the frequency domain resource.

In some embodiments, the network device may configure the frequency domain resource associated with the cell, the terminal may determine the cell according to the cell identifier, and determine the frequency domain resource associated with the cell, and then determine the frequency domain resource associated with the cell as the first bandwidth. For example, the network device may configure at least one BWP for the cell, and after the terminal determines the cell according to the cell identifier, it may determine at least one BWP associated with the cell, and then determine the at least one BWP associated with the cell as the second bandwidth.

FIG. 6 is a schematic flowchart of an activation control method according to an embodiment of the present disclosure. The activation control method shown in this embodiment may be performed by a terminal, and the terminal may communicate with a second device.

As shown in FIG. 6, the activation control method may include the following steps.

In step S601, second indication information sent by a second device is received, where the second indication information is used to instruct the terminal to activate or deactivate a first uplink reference signal resource associated with a second bandwidth.

In step S602, the first uplink reference signal resource associated with the second bandwidth is activated or deactivated.

It should be noted that the embodiment shown in FIG. 6 can be implemented independently or in combination with at least one other embodiment in the present disclosure. The specific selection can be made as needed, and the present disclosure is not limited thereto.

In some embodiments, after the second device determines to activate or deactivate the first uplink reference signal resource associated with the first bandwidth for the terminal according to the first indication information, the second bandwidth may be determined, where the second bandwidth may be the same as the first bandwidth, or the second bandwidth may be a bandwidth within the first bandwidth. For example, the first bandwidth is a bandwidth determined according to a frequency band identifier, and the second bandwidth may be one or more BWPs within the bandwidth determined according to the frequency band identifier.

Further, the second device may send second indication information to the terminal, and the second indication information is used to instruct the terminal to activate or deactivate the first uplink reference signal resource associated with the second bandwidth. The terminal may determine that it is necessary to activate or deactivate the first uplink reference signal resource associated with the second bandwidth according to the second indication information, and may then activate or deactivate the first uplink reference signal resource associated with the second bandwidth.

Since the second indication information does not merely instruct the terminal to activate or deactivate a certain uplink reference signal resource, but instructs the terminal to activate or deactivate the first uplink reference signal resource associated with the second bandwidth, it is convenient for the terminal to accurately determine to specifically activate or deactivate the first uplink reference signal resource associated with the first bandwidth, which is beneficial to avoid the difficulty in accurately determining the uplink reference signal resource that needs to be activated or deactivated for the terminal when the terminal sends the uplink reference signal by using bandwidth aggregation.

In some embodiments, the second indication information includes at least one of the following:
a cell identifier;
bandwidth information;
uplink reference signal resource information;
a spatial relation indication.

In some embodiments, the second indication information may include at least one cell identifier. The network device may configure the frequency domain resource associated with the cell. After receiving the second indication information, the terminal may determine at least one cell according to at least one cell identifier in the second indication information, and determine the frequency domain resource associated with each cell in the at least one cell, and then determine the frequency domain resource associated with the cell as the second bandwidth.

Exemplarily, when the second indication information includes only one cell identifier, the second bandwidth associated with the cell corresponding to the cell identifier may be at least two bandwidths, such as at least two BWPs, at least two frequency point identifiers, at least two point As and corresponding offset values relative to point As. Accordingly, activation or deactivation of uplink reference signals of multiple bandwidths can be achieved through one piece of second indication information.

Exemplarily, when the second indication information includes multiple cell identifiers, the second bandwidth associated with the cell corresponding to each cell identifier may be at least one bandwidth. Taking multiple cell identifiers including Cell ID1 and Cell ID2 as an example, for example, cell ID1 is associated with BWP1, and cell ID 2 is associated with BWP2. Accordingly, activation or deactivation of uplink reference signals of multiple bandwidths can be achieved through one piece of second indication information.

In some embodiments, the second indication information may include at least two pieces of bandwidth information. After receiving the second indication information, the terminal may determine the bandwidth associated with the uplink positioning reference signal according to the at least two pieces of bandwidth information in the second indication information. Exemplarily, the second indication information may include at least 2 pieces of BWP information, or at least 2 pieces of cell identifier information, or at least 2 pieces of frequency band identifier information. Accordingly, the activation or deactivation of uplink reference signals of multiple bandwidths can be achieved through one piece of second indication information.

In some embodiments, the second indication information may include at least two pieces of uplink reference signal resource information, such as two SRS resource sets, and each SRS resource set is associated with one bandwidth. After receiving the second indication information, the terminal may determine the uplink positioning reference signal that needs to be activated or deactivated according to the uplink reference signal resource information and its associated bandwidth in the second indication information.

For example, after the base station determines that it is necessary to activate the SRS resource sets with identifiers 1 and 2 associated with BWP#1 and the SRS resource sets with identifiers 1 and 2 associated with BWP#2 according to the first indication information, the second bandwidth may be determined. For example, the second bandwidth is the same as the first bandwidth and also includes BWP#1 and BWP#2. The base station may send the second indication information to the terminal to instruct the terminal to activate the SRS resource sets with identifiers 1 and 2 associated with BWP#1 and the SRS resource sets with identifiers 1 and 2 associated with BWP#2. According to the second indication information, the terminal may activate the SRS resource sets with identifiers 1 and 2 associated with BWP#1 and the SRS resource sets with identifiers 1 and 2 associated with BWP#2.

In some embodiments, the second indication information may include only one spatial relation indication, or may include multiple spatial relation indications, where the spatial relation indication is used to indicate a spatial relation.

For example, in the case where the second indication information includes one spatial relation indication, the terminal can communicate based on the spatial relation indicated by the one spatial relation indication on each bandwidth indicated by the second indication.

For example, in the case where the second indication information includes multiple spatial relation indications, each bandwidth corresponds to one spatial relation indication, and the terminal can determine the spatial relation corresponding to each indicated bandwidth according to the second indication.

In some embodiments, the bandwidth information (in the second indication information) includes at least one of the following:
a frequency band identifier;
bandwidth part information;
a common reference point of resource block grids;
an absolute frequency position of a reference resource block;
an offset relative to the reference point;
a carrier bandwidth;
a cell identifier.

In some embodiments, the terminal may determine at least one frequency band according to the frequency band identifier, and use the determined frequency band as the second bandwidth.

In some embodiments, the terminal may determine at least one BWP according to the bandwidth part information, and use the determined BWP as the second bandwidth.

In some embodiments, the terminal may determine the frequency domain resource (e.g., at least one resource block, at least one resource block grid) according to the common reference point of the resource block grids, and use the determined frequency domain resource as the second bandwidth. For example, the terminal determines the frequency domain resource according to the common reference point of the resource block grids, and specifically, it may determine the starting position of the frequency domain resource based on the common reference point of the resource block grids and the offset relative to the reference point, and determine the range of the frequency domain resource according to the carrier bandwidth, thereby determining the frequency domain resource according to the starting position of the frequency domain resource and the range of the frequency domain resource.

In some embodiments, the terminal may determine the frequency domain resource (e.g., at least one resource block, at least one reference resource block) according to the absolute frequency position of the reference resource block, and use the determined frequency domain resource as the second bandwidth. For example, the terminal determines the frequency domain resource according to the absolute frequency position of the reference resource block, and specifically, it may determine the starting position of the frequency domain resource based on the absolute frequency position of the reference resource block and the offset relative to the reference point, and determine the range of the frequency domain resource according to the carrier bandwidth, thereby determining the frequency domain resource according to the starting position of the frequency domain resource and the range of the frequency domain resource.

In some embodiments, the network device may configure the frequency domain resource associated with the cell, the terminal may determine the cell according to the cell identifier, and determine the frequency domain resource associated with the cell, and then determine the frequency domain resource associated with the cell as the second bandwidth. For example, the network device may configure at least one BWP for the cell, and after the terminal determines the cell according to the cell identifier, it may determine at least one BWP associated with the cell, and then determine at least one BWP associated with the cell as the second bandwidth.

In some embodiments, the uplink reference signal resource information includes at least one of the following:
an identifier of the uplink reference signal resource set, such as SRS resource set ID;
an identifier of the uplink reference signal resource, such as SRS resource ID;
an identifier of the uplink reference signal resource trigger, for example, SRS resource trigger ID.

In some embodiments, the uplink reference signal resource information may include an identifier of an uplink reference signal resource set. The terminal may determine the uplink reference signal resource set according to the identifier of the uplink reference signal resource set, and further determine that the uplink reference signal resource associated with the first bandwidth that needs to be activated or deactivated includes the determined uplink reference signal resource set.

In some embodiments, the uplink reference signal resource information may include an identifier of the uplink reference signal resource. The terminal may determine the uplink reference signal resource according to the identifier of the uplink reference signal resource, and further determine that the uplink reference signal resource associated with the first bandwidth that needs to be activated or deactivated includes the determined uplink reference signal resource.

In some embodiments, the uplink reference signal resource information may include an identifier of an uplink reference signal resource set and an identifier of an uplink reference signal resource. The terminal may determine the uplink reference signal resource set where the uplink reference signal resource that needs to be activated or deactivated is located according to the identifier of the uplink reference signal resource set, and further determine the uplink reference signal resource that needs to be activated or deactivated in the uplink reference signal resource set according to the identifier of the uplink reference signal resource.

In some embodiments, the uplink reference signal sent based on bandwidth aggregation includes at least one of the following:
a semi-persistent uplink reference signal, an aperiodic uplink reference signal.

In some embodiments, resources used to send semi-persistent uplink reference signals can be activated or deactivated. For resources used to send aperiodic uplink reference signals, the duration can be indicated, so only activation is required. After activation, the aperiodic uplink reference signal is sent only within the duration. When the duration ends, the sending of the aperiodic uplink reference signal can be stopped, so deactivation is not necessary.

In some embodiments, resources used to send aperiodic uplink reference signals may also be deactivated, but the embodiments of the present disclosure are mainly described in the case where resources used to send aperiodic uplink reference signals do not need to be deactivated.

In some embodiments, after determining to activate or deactivate the first uplink reference signal resource associated with the first bandwidth for the terminal according to the first indication information, the second device may determine a second bandwidth, where the second bandwidth may be the same as the first bandwidth, or the second bandwidth may be a bandwidth within the first bandwidth. Further, the second device may further send second indication information to the terminal, instructing the terminal to activate or deactivate the first uplink reference signal resource associated with the second bandwidth through the second indication information.

For example, in the case where the uplink reference signal includes a semi-persistent uplink reference signal, the second device may carry the second indication information via a media access control control element (MAC CE) and send it to the terminal. The second indication information may include at least one of the following: an identifier of an uplink reference signal resource set, such as an SRS resource set ID; an identifier of an uplink reference signal resource, such as an SRS resource ID.

For example, in the case where the uplink reference signal includes an aperiodic uplink reference signal, the second device may carry the second indication information via downlink control information (DCI) and send it to the terminal, where the second indication information may include an uplink reference signal resource trigger (SRS resource trigger).

In some embodiments, the uplink reference signal resource information may include an identifier of an uplink reference signal resource trigger, for example, the uplink reference signal resource information may include an uplink reference signal resource trigger list, the list including an identifier of at least one uplink reference signal resource trigger. For example, in the case that the uplink reference signal includes an SRS, the list may be an aperiodic SRS resource trigger list (aperiodicSRS-ResourceTriggerList).

The terminal can determine the identifier of the uplink reference signal resource trigger according to the second indication information, where there is an association relationship between the identifier of the uplink reference signal resource trigger and the uplink reference signal resource. The terminal can determine the uplink reference signal resource associated with the received identifier of the uplink reference signal resource trigger according to the association relationship, and then activate the uplink reference signal resource.

In some embodiments, the second bandwidth is one bandwidth or multiple bandwidths.

In some embodiments, the first uplink reference signal resource is one uplink reference signal resource or multiple uplink reference signal resources.

In some embodiments, in the case where the terminal sends an uplink reference signal in a bandwidth aggregation manner, resources for sending the uplink reference signal may be respectively configured on each aggregated bandwidth.

For example, the second bandwidth indicated by the second indication information may be one bandwidth, and the first uplink reference signal resource indicated may be one uplink reference signal resource, then the second indication information may indicate activation or deactivation of one uplink reference signal resource associated with the one bandwidth.

However, since the terminal sends the uplink reference signal by bandwidth aggregation, that is, the terminal can send the uplink reference signal on multiple uplink reference signal resources associated with multiple bandwidths, if the first indication information only indicates activation or deactivation of one uplink reference signal resource associated with one bandwidth, the flexibility of the indication is relatively limited.

Therefore, in some embodiments, the second bandwidth may be multiple bandwidths, and the first uplink reference signal resource may be multiple uplink reference signal resources, then the second indication information may indicate activation or deactivation of multiple uplink reference signal resources respectively associated with the multiple bandwidths. This is conducive to improving the flexibility of indicating activation and deactivation operations.

For example, the aggregated bandwidth includes two BWPs, which are respectively BWP#1 and BWP#2. The network device configures four SRS resource sets for the terminal in BWP#1, which are identified as 1, 2, 3 and 4, and configures three SRS resource sets for the terminal in BWP#2, which are identified as 1, 2 and 3.

The second bandwidth indicated by the second indication information may include BWP#1 and BWP#2, and the indicated first uplink reference signal resource may include SRS resource sets identified as 1 and 2 associated with BWP#1, and SRS resource sets identified as 2 and 3 associated with BWP#2. Then the terminal may determine that it is necessary to activate or deactivate the SRS resource sets identified as 1 and 2 associated with BWP#1, and the SRS resource sets identified as 2 and 3 associated with BWP#2. Accordingly, activation or deactivation of multiple uplink reference signal resources associated with multiple bandwidths can be achieved, thereby improving the flexibility of indicating activation and deactivation operations.

In some embodiments, the second indication information may further include an association relationship between the first uplink reference signal resource and the second bandwidth, or may not include an association relationship between the first uplink reference signal resource and the second bandwidth.

In some embodiments, in the case that the second bandwidth is multiple bandwidths, when the multiple uplink reference signal resources indicated by the second indication information are identified differently in the uplink reference signal resources associated with the multiple bandwidths, the second indication information may include an association relationship between the second uplink reference signal resource and the first bandwidth.

For example, in the case described in the above embodiment, the second indication information may include an association relationship, and the association relationship is used to indicate that the SRS resource sets identified as 1 and 2 are associated with BWP#1, and the SRS resource sets identified as 2 and 3 are associated with BWP#2, so that the terminal can accurately determine to specifically activate or deactivate the SRS resource sets identified as 1 and 2 associated with BWP#1, and the SRS resource sets identified as 2 and 3 associated with BWP#2.

In some embodiments, in the case that the second bandwidth is multiple bandwidths, when the first uplink reference signal resource indicated by the second indication information are identified identically in the uplink reference signal resource associated with each bandwidth, the second indication information may not necessarily include an association relationship between the first uplink reference signal resource and the second bandwidth.

For example, the first bandwidth indicated by the second indication information may include BWP#1 and BWP#2, and the indicated first uplink reference signal resource may include SRS resource sets identified as 1 and 2 associated with BWP#1, and SRS resource sets identified as 1 and 2 associated with BWP#2. Then the second indication information may not necessarily include an association relationship, and the terminal may determine that the SRS resource sets identified as 1 and 2 refer to the SRS resource sets identified as 1 and 2 associated with BWP#1, and the SRS resource sets identified as 1 and 2 associated with BWP#2.

In some embodiments, the names of information, etc. are not limited to the names recorded in the embodiments, and terms such as "information", "message", "signal", "signaling", "report", "configuration", "indication", "instruction", "command", "channel", "parameter", "domain", "field", "symbol", "code element (symbol)", "codebook", "codeword", "codepoint", "bit", "data", "program", and "chip" can be used interchangeably.

In some embodiments, terms such as "uplink", "uplink path", "physical uplink" can be interchangeable, terms such as "downlink", "downlink path", "physical downlink" can be interchangeable, and terms such as "side", "sidelink", "side communication", "sidelink communication", "direct connection", "direct link", "direct communication", "direct link communication" can be interchangeable.

In some embodiments, terms such as "radio", "wireless", "radio access network (RAN)", "access network (AN)", "RAN-based" can be interchangeable.

In some embodiments, terms such as "resource block (RB)", "physical resource block (PRB)", "sub-carrier group (SCG)", "resource element group (REG)", "PRB pair", "RB pair", "resource element (RE)", and "sub-carrier" can be used interchangeably.

In some embodiments, terms such as "send", "emit", "report", "issue", "transmit", "bidirectional transmission", "send and/or receive" can be used interchangeably.

Corresponding to the aforementioned embodiments of the activation control method, the present disclosure also provides embodiments of an activation control apparatus.

FIG. 7 is a schematic block diagram of an activation control apparatus according to an embodiment of the present disclosure. As shown in FIG. 7, the activation control apparatus includes:
a sending module 701, configured to send first indication information to a second device, where the first indication information is used to instruct the second device to activate or deactivate a first uplink reference signal resource associated with a first bandwidth of a terminal.

In some embodiments, the first device includes a core network device, and the second device includes an access network device; or, the first device includes a central unit access network device, and the second device includes a distribution unit access network device.

In some embodiments, the first indication information includes at least one of the following: bandwidth information; uplink reference signal resource information.

In some embodiments, the bandwidth information includes at least one of: a frequency band identifier; bandwidth part information; a common reference point of resource block grids; an absolute frequency position of a reference resource block; an offset relative to the reference point; a carrier bandwidth; a cell identifier.

In some embodiments, the uplink reference signal resource information includes at least one of the following: an identifier of an uplink reference signal resource set; an identifier of an uplink reference signal resource; an identifier of an uplink reference signal resource trigger.

In some embodiments, the first bandwidth is one bandwidth or multiple bandwidths.

In some embodiments, the first uplink reference signal resource is one uplink reference signal resource or multiple uplink reference signal resources.

In some embodiments, the first indication information is carried in at least one of the following: a new air interface positioning protocol A message; an F1AP message.

FIG. 8 is a schematic block diagram of an activation control apparatus according to an embodiment of the present disclosure. As shown in FIG. 8, the activation control apparatus includes:
a receiving module 801, configured to receive first indication information sent by a first device, where the first indication information is used to instruct a second device to activate or deactivate a first uplink reference signal resource associated with a first bandwidth of a terminal.

In some embodiments, the first device includes a core network device, and the second device includes an access network device; or, the first device includes a central unit access network device, and the second device includes a distribution unit access network device.

In some embodiments, the first indication information includes at least one of the following: bandwidth information; uplink reference signal resource information.

In some embodiments, the bandwidth information includes at least one of: a frequency band identifier; bandwidth part information; a common reference point of resource block grids; an absolute frequency position of a reference resource block; an offset relative to the reference point; a carrier bandwidth; a cell identifier.

In some embodiments, the uplink reference signal resource information includes at least one of the following: an identifier of an uplink reference signal resource set; an identifier of an uplink reference signal resource; an identifier of an uplink reference signal resource trigger.

In some embodiments, the first bandwidth is one bandwidth or multiple bandwidths.

In some embodiments, the first uplink reference signal resource is one uplink reference signal resource or multiple uplink reference signal resources.

In some embodiments, the first indication information is carried in at least one of the following: a new air interface positioning protocol A message; an F1AP message.

In some embodiments, the apparatus further includes: a sending module configured to send second indication information to the terminal, where the second indication information is used to instruct the terminal to activate or deactivate a first uplink reference signal resource associated with the second bandwidth.

In some embodiments, the second indication information includes at least one of the following: a cell identifier; bandwidth information; uplink reference signal resource information; and a spatial relation indication.

In some embodiments, the second indication information is carried in at least one of the following: a media access control control element; downlink control information.

FIG. 9 is a schematic block diagram of an activation control apparatus according to an embodiment of the present disclosure. As shown in FIG. 9, the activation control apparatus includes:
a receiving module 901, configured to receive second indication information sent by a second device, where the second indication information is used to instruct the terminal to activate or deactivate a first uplink reference signal resource associated with a second bandwidth;
a processing module 902, configured to activate or deactivate a first uplink reference signal resource associated with the second bandwidth.

In some embodiments, the second indication information includes at least one of the following: a cell identifier; bandwidth information; uplink reference signal resource information; and a spatial relation indication.

In some embodiments, the bandwidth information includes at least one of: a frequency band identifier; bandwidth part information; a common reference point of resource block grids; an absolute frequency position of a reference resource block; an offset relative to the reference point; a carrier bandwidth; a cell identifier.

In some embodiments, the uplink reference signal resource information includes at least one of the following: an identifier of an uplink reference signal resource set; an identifier of an uplink reference signal resource; an identifier of an uplink reference signal resource trigger.

In some embodiments, the second bandwidth is one bandwidth or multiple bandwidths.

In some embodiments, the first uplink reference signal resource is one uplink reference signal resource or multiple uplink reference signal resources.

For the apparatus embodiments, since they basically correspond to the method embodiments, the relevant parts refer to the partial description of the method embodiments. The apparatus embodiments described above are only schematic, where the modules described as separate components may or may not be physically separated, and the components displayed as modules may or may not be physical modules, that is, they may be located in one place, or they may be distributed on multiple network modules. Some or all of the modules may be selected according to actual needs to achieve the purpose of the schemes of the embodiments. The person skilled in the art can understand and implement them without paying creative work.

The embodiments of the present disclosure also propose an apparatus for implementing any of the above methods, for example, an apparatus is proposed, and the above apparatus includes a unit or module for implementing each step performed by the terminal in any of the above methods. For another example, another apparatus is also proposed, including a unit or module for implementing each step performed by the network device (such as an access network device, a core network function node, a core network device, etc.) in any of the above methods.

It should be understood that the division of the units or modules in the above apparatuses is only a division of logical functions, which can be fully or partially integrated into one physical entity or physically separated in actual implementation. In addition, the units or modules in the apparatuses can be implemented in the form of a processor calling software: for example, the apparatus includes a processor, the processor is connected to a memory, and instructions are stored in the memory. The processor calls the instructions stored in the memory to implement any of the above methods or implement the functions of the units or modules of the above apparatuses. The processor is, for example, a general-purpose processor, such as a central processing unit (CPU) or a microprocessor, and the memory is a memory inside the apparatus or a memory outside the apparatus. Alternatively, the units or modules in the apparatuses may be implemented in the form of hardware circuits, and the functions of some or all of the units or modules may be implemented by designing the hardware circuits. The above hardware circuits may be understood as one or more processors; for example, in one implementation, the above hardware circuits are application-specific integrated circuits (ASICs), and the functions of some or all of the above units or modules may be implemented by designing the logical relationship of the components in the circuits. For another example, in another implementation, the above hardware circuits may be implemented by programmable logic devices (PLDs), and Field Programmable Gate Arrays (FPGAs) may be used as an example, which may include a large number of logic gate circuits, and the connection relationship between the logic gate circuits may be configured by configuring the configuration files, thereby implementing the functions of some or all of the above units or modules. All units or modules of the above apparatuses may be implemented entirely in the form of processor calling software, or entirely in the form of hardware circuits, or partially in the form of processor calling software, and the remaining part in the form of hardware circuits.

In the embodiments of the present disclosure, the processor is a circuit with signal processing capability. In one implementation, the processor may be a circuit with instruction reading and running capability, such as a central processing unit (CPU), a microprocessor, a graphics processing unit (GPU) (which may be understood as a microprocessor), or a digital signal processor (DSP); in another implementation, the processor may implement certain functions through the logical relationship of a hardware circuit, and the logical relationship of the above hardware circuit may be fixed or reconfigurable, for example, the processor is a hardware circuit implemented by an application-specific integrated circuit (ASIC) or a programmable logic device (PLD), such as an FPGA. In a reconfigurable hardware circuit, the process of the processor loading a configuration document to implement the hardware circuit configuration may be understood as the process of the processor loading instructions to implement the functions of some or all of the above units or modules. In addition, it may also be a hardware circuit designed for artificial intelligence, which may be understood as ASIC, such as Neural Network Processing Unit (NPU), Tensor Processing Unit (TPU), Deep Learning Processing Unit (DPU), etc.

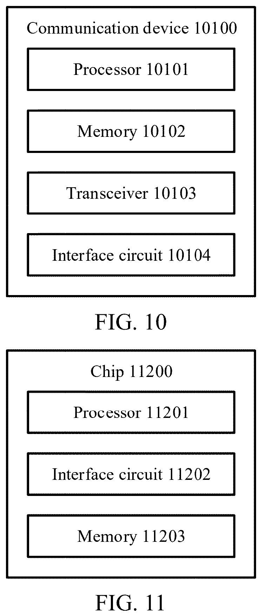

FIG. 10 is a schematic diagram of a structure of a communication device 10100 proposed in an embodiment of the present disclosure. The communication device 10100 may be a network device (e.g., an access network device, a core network device, etc.), or a terminal (e.g., a user equipment, etc.), or a chip, a chip system, or a processor that supports a network device to implement any of the above methods, or a chip, a chip system, or a processor that supports a terminal to implement any of the above methods. The communication device 10100 may be used to implement the method described in the above method embodiments, and the details may refer to the description in the above method embodiments.

As shown in FIG. 10, the communication device 10100 includes one or more processors 10101. The processor 10101 may be a general-purpose processor or a dedicated processor, for example, a baseband processor or a central processing unit. The baseband processor may be used to process the communication protocol and the communication data, and the central processing unit may be used to control the communication apparatus (such as a base station, a baseband chip, a terminal device, a terminal device chip, a DU or a CU, etc.), execute a program, and process the data of the program. The processor 10101 is used to call instructions so that the communication device 10100 performs any of the above methods.

In some embodiments, the communication device 10100 further includes one or more memories 10102 for storing instructions. Optionally, all or part of the memory 10102 may also be outside the communication device 10100.

In some embodiments, the communication device 10100 further includes one or more transceivers 10103. When the communication device 10100 includes one or more transceivers 10103, the communication steps such as sending and receiving in the above methods are executed by the transceiver 10103, and the other steps are executed by the processor 10101.

In some embodiments, the transceiver may include a receiver and a transmitter, and the receiver and the transmitter may be separate or integrated. Optionally, the terms such as transceiver, transceiver unit, transceiver machine, transceiver circuit, etc. may be replaced with each other, the terms such as transmitter, transmission unit, transmitter machine, transmission circuit, etc. may be replaced with each other, and the terms such as receiver, receiving unit, receiver machine, receiving circuit, etc. may be replaced with each other.

Optionally, the communication device 10100 further includes one or more interface circuits 10104, which are connected to the memory 10102. The interface circuit 10104 can be used to receive signals from the memory 10102 or other apparatuses, and can be used to send signals to the memory 10102 or other apparatuses. For example, the interface circuit 10104 can read instructions stored in the memory 10102 and send the instructions to the processor 10101.

The communication device 10100 described in the above embodiments may be a network device or a terminal, but the scope of the communication device 10100 described in the present disclosure is not limited thereto, and the structure of the communication device 10100 may not be limited by FIG. 10. The communication device may be an independent device or may be part of a relatively large device. For example, the communication device may be: 1) an independent integrated circuit (IC), or a chip, or a chip system or subsystem; (2) a collection of one or more ICs, optionally, the above IC collection may also include a storage component for storing data and programs; (3) an ASIC, such as a modem; (4) a module that can be embedded in other devices; (5) a receiver, a terminal device, an intelligent terminal device, a cellular phone, a wireless device, a handheld device, a mobile unit, a vehicle-mounted device, a network device, a cloud device, an artificial intelligence device, etc.; (6) others, etc.

FIG. 11 is a schematic diagram of a structure of a chip 11200 provided in an embodiment of the present disclosure. In the case where the communication device 10100 may be a chip or a chip system, reference may be made to the schematic diagram of the structure of the chip 11200 shown in FIG. 11, but the present disclosure is not limited thereto.

The chip 11200 includes one or more processors 11201, and the processor 11201 is used to call instructions so that the chip 11200 executes any of the above methods.

In some embodiments, the chip 11200 further includes one or more interface circuits 11202, which are connected to the memory 11203. The interface circuit 11202 can be used to receive signals from the memory 11203 or other apparatuses, and the interface circuit 11202 can be used to send signals to the memory

11203 or other apparatuses. For example, the interface circuit 11202 can read the instructions stored in the memory 11203 and send the instructions to the processor 11201. Optionally, the terms such as interface circuit, interface, transceiver pin, transceiver, etc. can be replaced with each other.

In some embodiments, the chip 11200 further includes one or more memories 11203 for storing instructions. Optionally, all or part of the memory 11203 may be outside the chip 11200.

The present disclosure also proposes a storage medium, on which instructions are stored, and when the above instructions are executed on the communication device 10100, the communication device 10100 performs any of the above methods. Optionally, the above storage medium is an electronic storage medium. Optionally, the above storage medium is a computer-readable storage medium, but is not limited thereto, and it can also be a storage medium readable by other apparatuses. Optionally, the above storage medium can be a non-transitory storage medium, but is not limited thereto, and it can also be a temporary storage medium.

The present disclosure also proposes a program product, and when the program product is executed by the communication device 10100, the communication device 10100 performs any of the above methods. Optionally, the program product is a computer program product.

The present disclosure also proposes a computer program, which, when executed on a computer, causes the computer to perform any one of the above methods.

## Claims

1. An activation control method, performed by a first device, wherein the method comprises:
sending first indication information to a second device, wherein the first indication information is used to instruct the second device to activate or deactivate a first uplink reference signal resource associated with a first bandwidth of a terminal.

2. The method according to claim 1, wherein
the first device comprises a core network device, and the second device comprises an access network device; or
the first device comprises a central unit access network device, and the second device comprises a distributed unit access network device.

3. The method according to claim 1 or 2, wherein the first indication information comprises at least one of:
bandwidth information; and
uplink reference signal resource information.

4. The method according to claim 3, wherein the bandwidth information comprises at least one of:
a frequency band identifier;
bandwidth part information;
a common reference point of resource block grids;
an absolute frequency position of a reference resource block;
an offset relative to the reference point;
a carrier bandwidth; and
a cell identifier.

5. The method according to claim 3, wherein the uplink reference signal resource information includes at least one of:
an identifier of an uplink reference signal resource set;
an identifier of an uplink reference signal resource; and
an identifier of an uplink reference signal resource trigger.

6. The method according to any one of claims 1 to 5, wherein the first bandwidth is one bandwidth or multiple bandwidths.

7. The method according to any one of claims 1 to 6, wherein the first uplink reference signal resource is one uplink reference signal resource or multiple uplink reference signal resources.

8. The method according to any one of claims 1 to 7, wherein the first indication information is carried in at least one of:
a new air interface positioning protocol A message; and
an F1AP message.

9. An activation control method, performed by a second device, wherein the method comprises:
receiving first indication information sent by a first device, wherein the first indication information is used to instruct the second device to activate or deactivate a first uplink reference signal resource associated with a first bandwidth of a terminal.

10. The method according to claim 9, wherein
the first device comprises a core network device, and the second device comprises an access network device; or
the first device comprises a central unit access network device, and the second device comprises a distributed unit access network device.

11. The method according to claim 9 or 10, wherein the first indication information comprises at least one of:
bandwidth information; and
uplink reference signal resource information.

12. The method according to claim 11, wherein the bandwidth information comprises at least one of:
a frequency band identifier;
bandwidth part information;
a common reference point of resource block grids;
an absolute frequency position of a reference resource block;
an offset relative to the reference point;
a carrier bandwidth; and
a cell identifier.

13. The method according to claim 11, wherein the uplink reference signal resource information comprises at least one of:
an identifier of an uplink reference signal resource set;
an identifier of an uplink reference signal resource; and
an identifier of an uplink reference signal resource trigger.

14. The method according to any one of claims 9 to 13, wherein the first bandwidth is one bandwidth or multiple bandwidths.

15. The method according to any one of claims 9 to 14, wherein the first uplink reference signal resource is one uplink reference signal resource or multiple uplink reference signal resources.

16. The method according to any one of claims 9 to 15, wherein the first indication information is carried in at least one of:
a new air interface positioning protocol A message; and
an F1AP message.

17. The method according to any one of claims 9 to 16, wherein the method further comprises:
sending second indication information to the terminal, wherein the second indication information is used to instruct the terminal to activate or deactivate a first uplink reference signal resource associated with a second bandwidth.

18. The method according to claim 17, wherein the second indication information comprises at least one of:
a cell identifier;
bandwidth information;
uplink reference signal resource information; and
a spatial relation indication.

19. The method according to claim 17 or 18, wherein the second indication information is carried in at least one of:
a media access control control element; and
downlink control information.

20. An activation control method, performed by a terminal, wherein the method comprises:
receiving second indication information sent by a second device, wherein the second indication information is used to instruct the terminal to activate or deactivate a first uplink reference signal resource associated with a second bandwidth; and
activating or deactivating the first uplink reference signal resource associated with the second bandwidth.

21. The method according to claim 20, wherein the second indication information comprises at least one of:
a cell identifier;
bandwidth information;
uplink reference signal resource information; and
a spatial relation indication.

22. The method according to claim 21, wherein the bandwidth information comprises at least one of:
a frequency band identifier;
bandwidth part information;
a common reference point of resource block grids;
an absolute frequency position of a reference resource block;
an offset relative to the reference point;
a carrier bandwidth; and
a cell identifier.

23. The method according to claim 21, wherein the uplink reference signal resource information comprises at least one of:
an identifier of an uplink reference signal resource set;
an identifier of an uplink reference signal resource; and
an identifier of an uplink reference signal resource trigger.

24. The method according to any one of claims 20 to 23, wherein the second bandwidth is one bandwidth or multiple bandwidths.

25. The method according to any one of claims 20 to 24, wherein the first uplink reference signal resource is one uplink reference signal resource or multiple uplink reference signal resources.

26. An activation control apparatus, comprising:
a sending module, configured to send first indication information to a second device, wherein the first indication information is used to instruct the second device to activate or deactivate a first uplink reference signal resource associated with a first bandwidth of a terminal.

27. An activation control apparatus, comprising:
a receiving module, configured to receive first indication information sent by a first device, wherein the first indication information is used to instruct a second device to activate or deactivate a first uplink reference signal resource associated with a first bandwidth of a terminal.

28. An activation control apparatus, comprising:
a receiving module, configured to receive second indication information sent by a second device, wherein the second indication information is used to instruct a terminal to activate or deactivate a first uplink reference signal resource associated with a second bandwidth; and
a processing module, configured to activate or deactivate the first uplink reference signal resource associated with the second bandwidth.

29. A communication device, comprising:
one or more processors;
wherein the processor is configured to call instructions so that the communication device performs the activation control method according to any one of claims 1 to 8, 9 to 19, and 20 to 25.

30. A communication system, comprising a first device, a second device and a terminal, wherein the first device is configured to implement the activation control method according to any one of claims 1 to 8, the second device is configured to implement the activation control method according to any one of claims 9 to 19, and the terminal is configured to implement the activation control method according to any one of claims 20 to 25.

31. A storage medium storing instructions, wherein when the instructions are executed on a communication device, the communication device is enabled to perform the activation control method according to any one of claims 1 to 8, 9 to 19, and 20 to 25.
